# EUROPEAN PATENT APPLICATION

(11) **EP 4 586 695 A1**
(43) Date of publication of application: **16.07.2025**
(21) Application number: 23870933.1
(22) Date of filing: 27.09.2023
(51) Int. Cl.: H04W 48/16

(54) **COMMUNICATION METHOD AND COMMUNICATION APPARATUS**

(30) Priority: 27.09.2022 CN 202211185992
(71) Applicant: Huawei Technologies Co., Ltd., Shenzhen, Guangdong 518129 (CN)
(72) Inventor: XU, Yishan, Shenzhen, Guangdong 518129 (CN); ZHU, Wenruo, Shenzhen, Guangdong 518129 (CN); HUANG, Kang, Shenzhen, Guangdong 518129 (CN)
(74) Representative: Maiwald GmbH
(86) International application number: PCT/CN2023/122065
(87) International publication number: WO 2024/067706

(57) **Abstract**

Embodiments of this application provide a communication method and a communication apparatus, and relate to the field of communication technologies. A first core network device receives an operation request of a service requester, where the operation request includes first identification information for identifying the service requester; the first core network device obtains second identification information based on the first identification information, where the second identification information indicates a terminal that the service requester requests to operate; and the first core network device sends the second identification information to an access network device serving the terminal, and triggers the access network device to perform an access procedure of the terminal. This manner can ensure that a terminal of a service requester is accurately inventoried, and can adapt to a requirement of the third generation partnership project 3GPP.

## Description

### CROSS-REFERENCE TO RELATED APPLICATIONS

This application claims priority to Chinese Patent Application No. 202211185992.0, filed with the China National Intellectual Property Administration on September 27, 2022 and entitled "COMMUNICATION METHOD AND COMMUNICATION APPARATUS", which is incorporated herein by reference in its entirety.

### TECHNICAL FIELD

Embodiments of this application relate to the field of communication technologies, and in particular, to a communication method and a communication apparatus.

### BACKGROUND

In a passive internet of things technology, a reader/writer performs an access procedure (or an inventory procedure) on a terminal according to an instruction delivered by a server. However, in a third generation partnership project (third generation partnership project, 3GPP) system, the reader/writer may perform an access procedure (or an inventory procedure) for a terminal corresponding to one or more service requesters. To enable the passive internet of things technology in the 3GPP system, a method for determining a terminal identifier is urgently needed.

### SUMMARY

This application provides a communication method and a communication apparatus, to accurately and successfully perform inventory on a terminal of an enterprise in a 3GPP system.

According to a first aspect, this application provides a communication method, including:
A first core network device receives an operation request of a service requester, where the operation request includes first identification information for identifying the service requester; the first core network device obtains second identification information based on the first identification information, where the second identification information indicates a terminal that the service requester requests to operate; and the first core network device sends the second identification information to an access network device serving the terminal, and triggers the access network device to perform an access procedure of the terminal.

In this application, the first core network device may be a control plane device or a user plane device. The first core network device may be an access and mobility management function (access and mobility management function, AMF), a session management function (session management function, SMF), a tag management function (tag management function, TMF), a policy control function (policy control function, PCF), a network exposure function (network exposure function, NEF), a unified data management (unified data management, UDM), a unified data repository (unified data repository, UDR), and the like. The access network devices may be a radio access network (radio access network, RAN) device, a transmission reception point (transmission reception point, TRP), a 5th generation (the 5th generation, 5G) NodeB (gNodeB, gNB), a pole station, a miniature base station, an indoor pole station, an integrated access and backhaul (integrated access and backhaul, IAB) node, or the like. The first core network device obtains the second identification information based on the first identification information in the operation request, to know which terminals of the service requester need to be operated. In this manner, information about a terminal that is of the service requester and that needs to be operated can be accurately known. Further, this manner can improve terminal access efficiency.

In an optional implementation, the first identification information includes at least one of the following information:
an identifier of the service requester, an application function identifier corresponding to the service requester, address information corresponding to the service requester, and port information corresponding to the service requester.

In this application, information about the service requester includes the foregoing plurality of types, so that the first core network device can better parse the information about the service requester.

In an optional implementation, the second identification information includes: mask information, where the mask information includes a user identifier; or the mask information includes a network identifier and the user identifier, where there is a correspondence between the user identifier and the service requester.

In this application, the mask information is constructed, so that the access network device can be prevented from knowing, in plain text, an identifier of the terminal to be operated, thereby ensuring information security.

In an optional implementation, the first core network device further sends access indication information to the access network device serving the terminal, where the access indication information is for triggering the access network device to perform the access procedure of the terminal.

In an optional implementation, the access indication information indicates one or more of the following information: the access network device starting to perform the access procedure; the access network device performing a first-mode access procedure; or the access network device performing a second-mode access procedure.

In an optional implementation, the access indication information includes one or more of the following information: the access network device starting to perform the access procedure; access procedure mode information; a first-mode access procedure; or a second-mode access procedure.

In an optional implementation, the access procedure mode information may indicate a manner in which the access network device performs the access procedure.

In an optional implementation, the access procedure mode information may include the first-mode access procedure or the second-mode access procedure.

In this application, the first-mode access procedure may be that after completing an access procedure of a first terminal, the access network device continues to perform an access procedure of a second terminal without obtaining indication information of the first core network device. The second-mode access procedure may be that after completing an access procedure of a first terminal, the access network device continuing to perform an access procedure of a second terminal with a need of obtaining indication information of the first core network device. In another possible implementation, the access indication information may indicate the access network device to perform random access of the terminal, and may be random access mode indication information or indication information indicating to start performing random access. The random access mode indication information may include indicating the access network device to continuously perform random access (to be specific, after completing a random access procedure of a current terminal, the access network device may immediately start a random access procedure of a next terminal), or indicating the access network device to perform a random access procedure of a next terminal under an instruction of the first core network device (to be specific, after completing a random access procedure of a current terminal, the access network device needs to wait for indication information of an AMF before performing a random access procedure of a next terminal). This is not specifically limited in this application. Optionally, the access information may be a nextgeneration application protocol (next generation application protocol, NGAP) message or an N2 message. Optionally, the access information may be a parameter in an NGAP message or a parameter in an N2 message. The access indication information may indicate an access occasion of performing random access. Based on the access indication information included in the access information, a random access execution opportunity can be known, to avoid a blind operation and reduce random access execution efficiency.

In an optional implementation, there is a first correspondence between the second identification information and the first identification information. That the first core network device obtains second identification information based on the first identification information includes:
The first core network device obtains the second identification information based on the first correspondence and the first identification information.

Obtaining the second identification information based on the first correspondence and the first identification information can improve efficiency of obtaining the second identification information.

In an optional implementation, the first core network device pre-configures the first correspondence, the first core network device generates the first correspondence, or the first core network device obtains the first correspondence from a second core network device.

In an optional implementation, the first core network device receives first terminal information reported by one or more terminals in a plurality of terminals that the service requester requests to operate; and if the first terminal information includes an electronic product code (electronic product code, EPC), the first core network device obtains a target EPC code from the first terminal information and sends the target EPC code to the service requester; or the first core network device obtains second terminal information based on the first terminal information.

In an optional implementation, the second terminal information includes one or more of the following information:
a subscription concealed identifier (subscription concealed identifier, SUCI), a subscription permanent identifier (subscription permanent identifier, SUPI), a 5th-generation globally unique temporary identity (5G-globally unique temporary identity, 5G-GUTI), a temporary mobile subscriber identity (temporary mobile subscriber identity, TMSI), a 5G system-temporary mobile subscriber identity (5G-s-temporary mobile subscriber identity, 5G-S-TMSI), a generic public subscription identifier (generic public subscription identifier, GPSI), an EPC, a network identifier, and identification information indicating the service requester.

According to a second aspect, this application provides a communication method, including:
A first core network device receives an operation request of a service requester, where the operation request includes first identification information for identifying the service requester; the first core network device obtains second identification information based on the first identification information, and triggers an access network device that serves the service requester to perform an access procedure for a plurality of terminals, where the second identification information indicates a terminal corresponding to the service requester; the first core network device receives first terminal information reported by one or more first terminals in the plurality of terminals; and the first core network device sends third terminal information to the service requester based on the second identification information, where the third terminal information is terminal information that is obtained by the first core network device by screening the first terminal information and that needs to be reported to the service requester.

In this application, the first core network device obtains the second identification information based on the first identification information in the operation request, to obtain, through screening based on the second identification information, the terminal corresponding to the service requester. In this manner, information about a terminal that is of the service requester and that needs to be operated can be accurately known. Further, this manner can improve terminal access efficiency.

In an optional implementation, the first identification information includes at least one of the following information:
an identifier of the service requester, an application function identifier corresponding to the service requester, address information corresponding to the service requester, and port information corresponding to the service requester.

In an optional implementation, the second identification information includes the following information:
a user identifier;
an event identifier or a transaction identifier; and/or
an NGAP identifier, where
there is a correspondence between the second identification information and the service requester.

It can be understood that there is a correspondence between the user identifier and the service requester, there is a correspondence between the event identifier (or the transaction identifier) and the service requester, or there is a correspondence among the user identifier, the event identifier (or the transaction identifier), and the service requester.

In an optional implementation, the first core network device further sends access indication information to the access network device serving the terminal, where the access indication information is for triggering the access network device to perform an access procedure of the terminal.

In an optional implementation, the access indication information indicates one or more of the following information:
the access network device starting to perform the access procedure;
the access network device performing a first-mode access procedure; or
the access network device performing a second-mode access procedure.

In an optional implementation, there is a first correspondence between the second identification information and the first identification information. That the first core network device obtains second identification information based on the first identification information includes:
The first core network device obtains the second identification information based on the first correspondence and the first identification information.

In an optional implementation, the first core network device pre-configures the first correspondence, the first core network device generates the first correspondence, or the first core network device obtains the first correspondence from a second core network device.

In an optional implementation, the first core network device sends second identification information to the access network device; and the first core network device receives the second identification information and the first terminal information reported by the one or more first terminals in the plurality of terminals via the access network device.

In this manner, the first core network device may determine the first identification information based on the second identification information and the first correspondence, and obtain, from the first terminal information through screening based on the first identification information, the first terminal information (or the third terminal information) corresponding to the service requester, thereby improving data processing efficiency and accuracy.

In an optional implementation, if the third terminal information includes an EPC, the first core network device obtains a target EPC code from the third terminal information and sends the target EPC code to the service requester; or the first core network device obtains fourth terminal information based on the third terminal information.

In an optional implementation, the fourth terminal information includes one or more of the following information:
an SUCI, an SUPI, a 5G-GUTI, a TMSI, a 5G-S-TMSI, a GPSI, an EPC, a network identifier, and identification information indicating the service requester.

According to a third aspect, this application provides a communication method, including:
A first core network device receives first terminal information; the first core network device determines a first service requester based on the first terminal information, where the first service requester is one of at least one service requester; and the first core network device sends second terminal information to the first service requester, where the second terminal information corresponds to the first terminal information.

In an optional implementation, the first terminal information includes identification information indicating the first service requester. That the first core network device determines a first service requester based on the first terminal information includes: The first core network device determines the first service requester based on the identification information indicating the first service requester.

In an optional implementation, the first terminal information includes a first terminal identifier, and there is a correspondence between the first terminal identifier and identification information of the first service requester. That the first core network device determines a first service requester based on the first terminal information includes: The first core network device determines the first service requester based on the first terminal identifier and the correspondence.

**In** an optional implementation, the first terminal information includes a first terminal identifier, and there is a correspondence between the first terminal identifier and the first service requester. That the first core network device determines a first service requester based on the first terminal information includes: The first core network device determines the first service requester based on the first terminal identifier and the correspondence.

**In** an optional implementation, that the first core network device determines a first service requester based on the first terminal information includes: The first core network device obtains subscription data based on the first terminal information; and the first core network device determines the first service requester based on the subscription data.

**In** an optional implementation, the first core network device further obtains subscription data based on the first terminal information; and the first core network device determines the second terminal information based on the subscription data.

**In** an optional implementation, the identification information of the first service requester includes at least one of the following information: an identifier of the first service requester, an application function identifier corresponding to the first service requester, address information corresponding to the first service requester, and port information corresponding to the first service requester.

In an optional implementation, the first core network device further receives a subscription request from the first service requester, where the subscription request indicates to obtain terminal information of a terminal corresponding to the first service requester. That the first core network device sends second terminal information to the first service requester includes: The first core network device sends the second terminal information to the first service requester based on the subscription request when determining that the first terminal information is the terminal information of the terminal corresponding to the first service requester.

In an optional implementation, the subscription request includes one or more of the following: sending the second terminal information to the first service requester after the terminal corresponding to the first service requester accesses a network; sending the second terminal information to the first service requester after the terminal corresponding to the first service requester accesses a network within specified time; and sending the second terminal information to the first service requester after the terminal corresponding to the first service requester accesses a network in a specified area.

In an optional implementation, the first core network device further obtains the second terminal information from the first terminal information.

In an optional implementation, the second terminal information includes one or more of the following information:
an SUCI, an SUPI, a 5G-GUTI, a TMSI, a 5G-S-TMSI, a GPSI, an EPC, the identification information indicating the first service requester, and a network identifier.

According to a fourth aspect, this application provides a communication method, including:
An access network device receives second identification information, where the second identification information indicates a terminal that a service requester requests to operate; and the access network device performs an access procedure of the terminal based on the second identification information.

In an optional implementation, the second identification information includes:
a user identifier; or a network identifier and the user identifier, where there is a correspondence between the user identifier and the service requester.

In an optional implementation, that the access network device performs an access procedure of the terminal based on the second identification information includes:
The access network device constructs mask information based on the second identification information; and
the access network device sends the mask information to trigger the access procedure of the terminal.

In an optional implementation, the access network device receives access indication information, where the access indication information is for triggering the access network device to perform the access procedure of the terminal.

In an optional implementation, the access indication information indicates one or more of the following information:
the access network device starting to perform the access procedure;
the access network device performing a first-mode access procedure; or
the access network device performing a second-mode access procedure.

According to a fifth aspect, this application provides a communication method, including:
An access network device receives second identification information, where the second identification information indicates a terminal corresponding to a service requester; and the access network device performs an access procedure of a plurality of terminals based on the second identification information.

In an optional implementation, the second identification information includes the following information:
a user identifier;
an event identifier or a transaction identifier; and/or
an NGAP identifier, where
there is a correspondence between the second identification information and the service requester.

In an optional implementation, that the access network device performs an access procedure of the terminal based on the second identification information includes:
The access network device constructs mask information based on the second identification information; and
the access network device sends the mask information to trigger the access procedure of the terminal.

In an optional implementation, the access network device receives access indication information, where the access indication information is for triggering the access network device to perform an access procedure of the terminal.

In an optional implementation, the access indication information indicates one or more of the following information:
the access network device starting to perform the access procedure;
the access network device performing a first-mode access procedure; or
the access network device performing a second-mode access procedure.

In an optional implementation, the access network device sends, to the first core network device, the second identification information and first terminal information reported by one or more first terminals.

According to a sixth aspect, an embodiment of this application provides a communication apparatus. The communication apparatus may be an access network device (for example, the access network device in the first aspect, the access network device in the second aspect, the access network device in the third aspect, or the access network device in the fourth aspect) or a chip disposed in the access network device, or may be a core network device (for example, the first core network device or the second core network device in the first aspect) or a chip disposed in the core network device. The communication apparatus has a function of implementing any one of the first aspect to the fifth aspect. For example, the communication apparatus includes a corresponding module, unit, or means (means) for performing the steps in any one of the first aspect to the fifth aspect. The function, unit, or means may be implemented by using software, implemented by using hardware, or implemented by hardware executing corresponding software.

In a possible design, the communication apparatus includes a processing unit and a transceiver unit. The transceiver unit may be configured to send and receive signals, to implement communication between the communication apparatus and another apparatus. For example, the transceiver unit is configured to receive an operation request from a service requester. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive a signal, and the processor executes program instructions, to complete the method in any possible design or implementation of the first aspect to the fifth aspect. The communication apparatus may further include one or more memories. The memory is configured to be coupled to the processor, and the memory may store a necessary computer program or necessary instructions for implementing the function in any one of the first aspect to the fifth aspect. The processor may execute the computer program or the instructions stored in the memory. When the computer program is executed or the instructions are executed, the communication apparatus is enabled to implement the method in any possible design or implementation in the first aspect to the fourth aspect.

In another possible design, the communication apparatus includes a processor. The processor may be configured to be coupled to a memory. The memory may store a necessary computer program or necessary instructions for implementing the function in any one of the first aspect to the fifth aspect. The processor may execute the computer program or the instructions stored in the memory. When the computer program is executed or the instructions are executed, the communication apparatus is enabled to implement the method in any possible design or implementation in the first aspect to the fifth aspect.

In still another possible design, the communication apparatus includes a processor and an interface circuit. The processor is configured to: communicate with another apparatus through the interface circuit, and perform the method in any possible design or implementation of the first aspect to the fifth aspect.

It may be understood that in the sixth aspect, the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a seventh aspect, an embodiment of this application provides a communication system. The communication system includes the access network device and the core network device in the first aspect to the fifth aspect.

According to an eighth aspect, this application provides a chip system. The chip system includes a processor, and may further include a memory, configured to implement the method in any one of the possible designs of the first aspect to the fourth aspect. The chip system may include a chip, or may include a chip and another discrete component.

According to a ninth aspect, this application further provides a computer-readable storage medium. The computer-readable storage medium stores computer-readable instructions. When the computer-readable instructions are run on a computer, the computer is enabled to perform the method in any one of the possible designs of the first aspect to the fifth aspect.

According to a tenth aspect, this application provides a computer program product including instructions. When the computer program product runs on a computer, the computer is enabled to perform the method in various embodiments of the first aspect to the fifth aspect.

For technical effects that can be achieved in the second aspect to the tenth aspect, refer to the descriptions of the technical effects that can be achieved in the corresponding possible design solutions in the first aspect. Details are not described herein again in this application.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a diagram of a passive internet of things service;
FIG. 4A is a diagram of a counting procedure;
FIG. 4B is a diagram of a read/write procedure;
FIG. 5A and FIG. 5B are a schematic flowchart of a communication method according to an embodiment of this application;
FIG. 6A and FIG. 6B are a schematic flowchart of another communication method according to an embodiment of this application;
FIG. 7A and FIG. 7B are a schematic flowchart of a communication method according to an embodiment of this application;
FIG. 8A and FIG. 8B are a schematic flowchart of another communication method according to an embodiment of this application;
FIG. 9 is a schematic flowchart of still another communication method according to an embodiment of this application;
FIG. 10A and FIG. 10B are a schematic flowchart of still another communication method according to an embodiment of this application;
FIG. 11 is a diagram of a structure of a communication apparatus according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, a plurality of means two or more than two. Therefore, for implementations of the apparatus and the method, reference may be made to each other, and repeated parts are not described again.

To cope with challenges of wireless broadband technologies and maintain a leading advantage of a 3GPP network, the 3GPP standard group formulates a next generation mobile communication network system (Next Generation System) architecture, referred to as a 5G network architecture. The architecture not only supports access to a 5G core network (core network, CN) by using a radio access technology (for example, a long-term evolution (long term evolution, LTE) access technology, a RAN access technology, or the like) defined by the 3GPP standard group, but also supports access to a core network by using a non-3GPP (non-3GPP) access technology via a non-3GPP interworking function (non-3GPP interworking function, N3IWF) or a next generation access gateway (next generation packet data gateway, ngPDG).

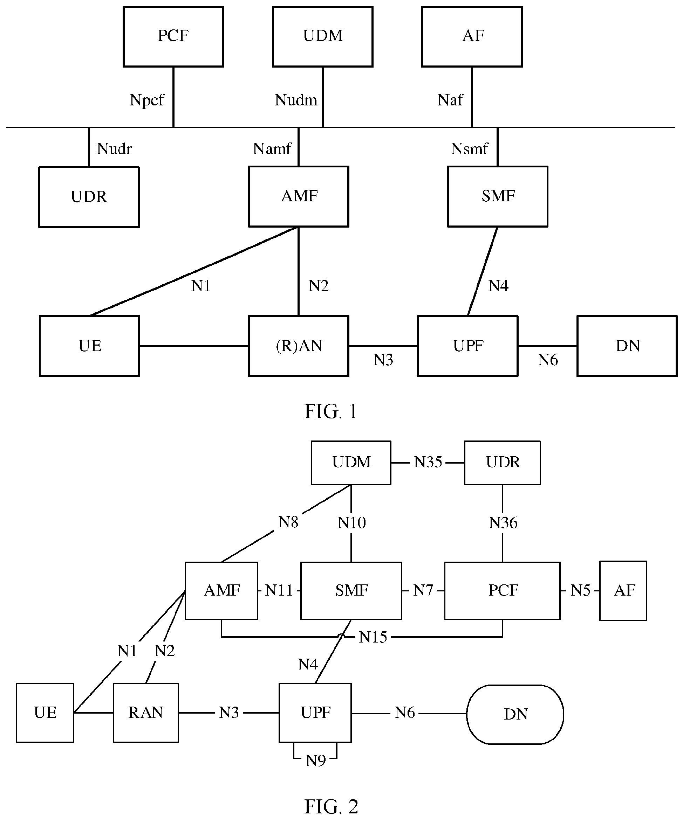

FIG. 1 is a diagram of a 5G network architecture based on a service-oriented architecture. The 5G network architecture shown in FIG. 1 may include an access network device and a core network device. A terminal accesses a data network (data network, DN) via the access network device and the core network device. The core network device includes but is not limited to some or all of the following network elements: an authentication server function (authentication server function, AUSF) network element (not shown in the figure), a UDM network element, a UDR network element, a network repository function (network repository function, NRF) network element (not shown in the figure), an NEF network element (not shown in the figure), an application function (application function, AF) network element, a PCF network element, an AMF network element, an SMF network element, a user plane function (user plane function, UPF) network element, and a binding support function (binding support function, BSF) network element (not shown in the figure).

The terminal may be user equipment (user equipment, UE), a mobile station, a mobile terminal, or the like. The terminal may be widely used in various scenarios, for example, a device-to-device (device-to-device, D2D) scenario, a vehicle-to-everything (vehicle to everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an urban air transportation vehicle (such as an uncrewed aerial vehicle or a helicopter), a ship, a robot, a mechanical arm, a smart home device, or the like.

The access network device may be a radio access network (RAN) device or a wireline access network (wireline access network, WAN) device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, a base station or a module or unit that completes some functions of the base station in a future mobile communication system, for example, a central unit (central unit, CU), a distributed unit (distributed unit, DU), or the like. The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wireline access network device includes but is not limited to: a wireline access gateway (wireline access gateway), a fixed-line phone network device, a switch, and a router.

The access network device and the terminal may be at fixed positions, or may be movable. The access network device and the terminal may be deployed on land, including an indoor or outdoor device, or a handheld or vehicle-mounted device; may be deployed on water; or may be deployed on an airplane, a balloon, and an artificial satellite in the air. An application scenario of the access network device and the terminal is not limited in embodiments of this application.

The AMF network element includes functions such as mobility management, and access authentication/authorization. In addition, the AMF network element is further responsible for transmitting a user policy between the terminal and the PCF network element.

The SMF network element includes functions such as session management, execution of a control policy delivered by a PCF, UPF selection, and assignment of an internet protocol (internet protocol, IP) address of a terminal.

The UPF network element includes functions such as user plane data forwarding, session/flow-level-based charging statistics collection, and bandwidth limitation.

The UDM network element includes functions such as performing of subscription data management, and user access authorization.

The UDR network element includes functions such as storage and retrieval of subscription data, policy data, application data, and other types of data.

The NEF network element is configured to support exposure of capabilities and events.

The AF network element transfers a requirement of an application side for a network side, for example, a quality of service (quality of service, QoS) requirement, user status event subscription, or the like. The AF may be a service requester function entity, or may be an operator-deployed application service, for example, an IP multimedia subsystem (IP multimedia subsystem, IMS) voice call service. The AF network element includes an AF network element (to be specific, an AF network element of an operator) in a core network and an AF network element (for example, an application server of an enterprise) of a service requester.

The PCF network element includes policy control functions such as being responsible for charging at a session or business flow level, QoS bandwidth assurance and mobility management, and terminal policy decision. The PCF network element includes an access and mobility management policy control function (access and mobility management policy control function, AM PCF) network element and a session management policy control function (session management PCF, SM PCF) network element. The AM PCF network element is configured to formulate an AM policy for a terminal, and the AM PCF network element may alternatively be referred to as a policy control function network element that provides a service for a terminal (PCF for UE). The SM PCF network element is configured to formulate a session management policy (session management policy, SM policy) for a session. The SM PCF network element may alternatively be referred to as a policy control function network element that serves a session (PCF for a PDU session).

The NRF network element may be configured to provide a network element discovery function, and provide, based on a request of another network element, network element information corresponding to a network element type. The NRF further provides network element management services, such as network element registration, update, and de-registration, and network element status subscription and push.

The BSF network element provides functions such as registration/de-registration/update of a BSF service, NRF connection detection, session binding information creation, UE information obtaining, and session binding information query for duplicate IP addresses.

The AUSF network element is responsible for performing authentication on a user, to determine whether the user or a device is allowed to access the network.

The DN is a network located outside the operator network. A plurality of DNs can access the operator network, and a plurality of services can be deployed on the DN, to provide services such as data and/or voice for a terminal. For example, the DN is a private network of an intelligent factory, a sensor installed in a workshop of the intelligent factory may be the terminal, a control server of the sensor is deployed in the DN, and the control server can provide a service for the sensor. The sensor may communicate with the control server to obtain instructions of the control server, transmit collected sensor data to the control server based on the instructions, and the like. For another example, the DN is an internal office network of a company, a mobile phone or a computer of an employee in the company may be the terminal, and the mobile phone or the computer of the employee can access information, a data resource, or the like on the internal office network of the company.

In FIG. 1, Npcf, Nurf, Nudm, Naf, Namf, and Nsmf are service-based interfaces provided by the PCF, the UDR, the UDM, the AF, the AMF, and the SMF, respectively, and are configured to invoke corresponding service-based operations. N1, N2, N3, N4, and N6 are interface sequence numbers. Meanings of these interface sequence numbers are as follows:
(1) N1 is an interface between the AMF and the terminal, and may be configured to transfer non-access stratum (non-access stratum, NAS) signaling (for example, including a QoS rule from the AMF) and the like to the terminal.
(2) N2 is an interface between the AMF and the access network device, and may be configured to transfer radio bearer control information from a core network side to the access network device, and the like.
(3) N3 is an interface between the access network device and the UPF, and may mainly be configured to transfer uplink and downlink user plane data between the access network device and the UPF.
(4) N4 is an interface between the SMF and the UPF, and may be configured to transfer information between a control plane and a user plane, including delivery of a forwarding rule, a QoS rule, a data statistics rule, and the like from the control plane to the user plane, and reporting of user plane information.
(5) N6 is an interface between the UPF and the DN, and is configured to transfer uplink and downlink user data flows between the UPF and the DN.

FIG. 2 is a diagram of a 5G network architecture based on a point-to-point interface. For descriptions of functions of network elements, refer to the descriptions of the functions of the corresponding network elements in FIG. 2. Details are not described again. A main difference between FIG. 2 and FIG. 1 lies in that an interface between control plane network elements in FIG. 1 is a service-oriented interface, and an interface between control plane network elements in FIG. 2 is a point-to-point interface.

In the architecture shown in FIG. 2, names and functions of the interfaces between the network elements are as follows:
(1) For meanings of N1, N2, N3, N4, and N6 interfaces, refer to the foregoing descriptions.
(2) N5 is an interface between the AF network element and the PCF network element, and may be configured to deliver an application service request and report a network event.
(3) N7 is an interface between the PCF network element and the SMF network element, and may be configured to deliver a protocol data unit (protocol data unit, PDU) session granularity control policy and a service data flow granularity control policy.
(4) N8 is an interface between the AMF network element and the UDM network element, and may be used by the AMF network element to obtain subscription data and authentication data related to access and mobility management from the UDM network element, used by the AMF network element to register information related to terminal mobility management with the UDM network element, and the like.
(5) N9 is a user plane interface between the UPF network element and the UPF network element, and is configured to transfer uplink and downlink user data flows between UPF network elements.
(6) N10 is an interface between the SMF network element and the UDM network element, and may be used by the SMF network element to obtain subscription data related to session management from the UDM network element, used by the SMF network element to register information related to a terminal session with the UDM network element, and the like.
(7) N11 is an interface between the SMF network element and the AMF network element, and may be configured to transfer PDU session tunnel information between the access network device and the UPF, transfer a control message sent to the terminal, transfer radio resource control information sent to the access network device, and the like.
(8) N15 represents an interface between the PCF network element and the AMF network element, which may be configured to deliver a terminal policy and an access control-related policy.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, may be software functions running on dedicated hardware, or may be virtualized functions instantiated on a platform (for example, a cloud platform). Optionally, the foregoing network element or function may be implemented by one device, may be jointly implemented by a plurality of devices, or may be implemented by one functional module in one device. This is not specifically limited in embodiments of this application.

The user plane network element, the session management network element, and the mobility management network element in this application may be respectively a UPF network element, an SMF network element, and an AMF network element in a 5G system, or may be network elements that have functions of the UPF network element, the SMF network element, and the AMF network element in a future communication network such as a 6th (the 6th generation, 6G) network. This is not limited in this application. In embodiments of this application, an example in which the UPF network element, the SMF network element, and the AMF network element are respectively a user plane network element, a session management network element, and a mobility management network element is used for descriptions. In addition, the UPF network element, the SMF network element, and the AMF network element are respectively referred to as a UPF, an SMF, and an AMF for short.

For ease of descriptions, in embodiments of this application, a base station (for example, an eNB in 4th (the 4th generation, 4G), a gNB in 5G, or a base station in future communication) is used as an example of the access network device for description, and a "base station" that appears subsequently may be replaced with an "access network device". In embodiments of this application, UE is used as an example of a terminal for descriptions, and "UE" that appears subsequently may be replaced with a "terminal".

It may be understood that the core network may further include another network function entity. This is not limited in this application.

The technical solutions provided in embodiments of this application may be applied to various communication systems. For example, the technical solutions may be applied to a 5G system, or may be applied to another future-oriented new system, for example, a 6G system. This is not limited in embodiments of this application. In addition, the terms "system" and "network" are interchangeable.

For ease of understanding of embodiments of this application, several basic concepts in embodiments of this application are briefly described.
1. Passive internet of things (passive IoT, P-IoT, or referred to as ambient IoT, A-IoT): To be specific, some network nodes may be passive (for example, a passive device), semi-passive (for example, a semi-passive device), semi-active (for example, a semi-active device), or active (for example, an active device), and obtain energy through solar energy, radio frequency, wind energy, water energy, tidal energy, or the like. A manner of obtaining energy is not specifically limited in this application. These nodes are not equipped with or do not depend on power supply devices such as batteries, but perform energy harvesting from an environment, to support data sensing, transmission, and distributed computing. These network nodes may further store harvested energy. The passive internet of things architecture may include a terminal, a reader (reader, or may be referred to as a reader/writer), and a server. The terminal may be in a tag form, or may be in any other terminal form, which is not limited. The terminal may be passive (for example, a passive device), semi-passive (for example, a semi-passive device), semi-active (for example, a semi-active device), or active (for example, an active device). The terminal may not have an energy storage capability (for example, not have a capacitor), or may have an energy storage capability (for example, have a capacitor to store electric energy). The reader may be an access network device, for example, a base station, a pole station, a micro base station, a macro base station, an IAB node, a mobile base station, a home base station, or an indoor base station (for example, a Lampsite). Alternatively, the reader may be a terminal, for example, a mobile phone, an IoT device, or a handheld reader/writer. Herein, an example in which the terminal is a tag is used for description, but the terminal is not limited to the tag. The reader (reader) performs non-contact bidirectional data communication through wireless radio frequency and reads or writes an electronic tag or a radio frequency card (Tag) through wireless radio frequency, to identify a target and exchange data. One is that when entering an effective identification range of the reader, the tag receives a radio frequency signal sent by the reader, and sends, by using energy obtained through an induction current, information (corresponding to the passive tag) stored in a chip. The other is that the tag may store part of electric energy through solar energy, so that the tag can actively send a signal of a specific frequency (in this case, the tag may also be referred to as a semi-passive or semi-active tag). The reader receives and decodes the information, and sends the information to a central information system for related data processing.

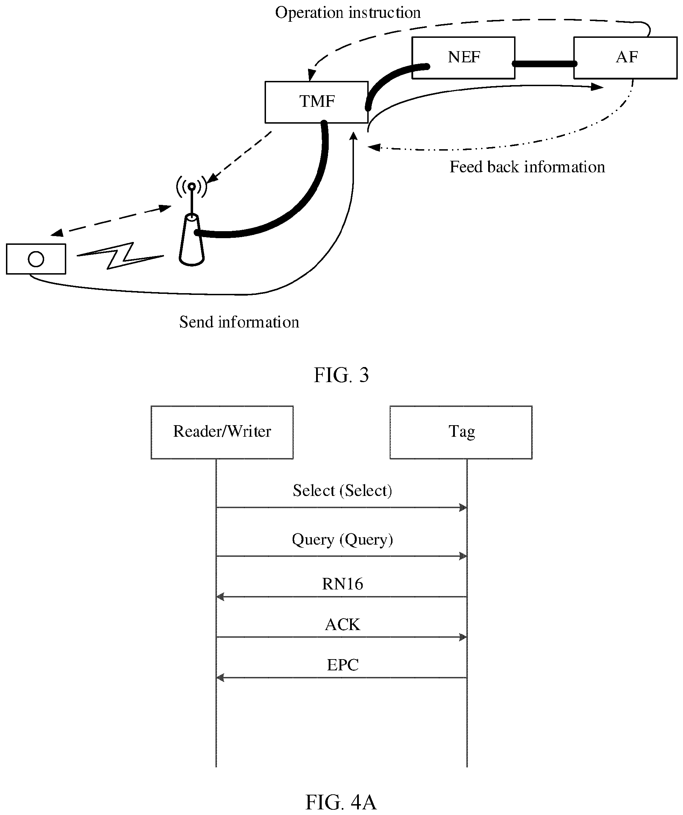

FIG. 3 is a diagram of a passive internet of things service. In FIG. 3, an example in which a reader is a base station (a pole station or a macro base station) is used for description. However, a device form of the reader is not limited in this application.

When performing an operation on a tag, a server may send an operation instruction via an internet of things management function (for example, a tag management function TMF, where the TMF may be integrated with a core network device, an access network device, or an application function, or may be an independent core network device). The operation instruction may include a counting operation (or referred to as an inventory operation) (which may also be understood as obtaining identification information of the tag, and each tag has an identifier thereof. The identifier of the tag may be assigned by an enterprise (to be specific, written into the tag when the enterprise prints the tag), or may be assigned by an operator. In a possible implementation, the identifier of the tag may be a globally unique code, for example, an EPC, or may be a temporary identifier or a non-globally unique identifier. In a counting procedure, the server may deliver a counting instruction. Usually, the counting instruction includes information such as an identification range of the tag, an identifier of the reader, and location information. After receiving the counting instruction, the reader performs counting on the tag according to the counting instruction, and sends the identification information of the tag to the server. Alternatively, the server sends an instruction, and the reader forwards the instruction to the tag. The tag learns, based on content of the instruction, that an operation is a counting operation. The tag sends identification information of the tag to the reader, and the reader sends the identification information of the tag to the server; or the tag sends an identifier of the tag to the core network through the reader, and the core network sends the identification information of the tag to the server), a read operation (to be specific, performing data reading on the tag, where the tag may have a storage function, and a storage area of the tag may store data. If the server intends to perform a read operation on the tag, the server sends a read instruction, and the reader or the core network performs the read operation on the tag according to the instruction, reads the data from the storage area of the tag, and sends the data to the server), a write operation (to be specific, performing data writing on the tag, where the server may send a write instruction, and the reader or the core network performs a write operation on the tag according to the instruction, to write data into the storage area of the tag), a disable operation (to be specific, invalidating or disabling the tag, where the server may send a disable instruction, where the disable instruction may include a tag identifier (to be specific, an identifier of a tag that is expected to be disabled or invalidated). The reader or the core network performs an invalidation operation on the tag according to the instruction. After the operation is completed, the tag is invalidated or disabled, and counting or another operation cannot be performed on the tag), tag information obtaining (which may be understood as a top description of the foregoing operations (for example, a top description of the counting operation and the read operation), and whether the server is a counting tag or reads tag data is not distinguished. The operation obtains the tag information, and the tag information may be an identification information of the tag or information stored in a tag storage area), and an operation of exchanging information with the tag (which may be understood as a top description of the foregoing operations. After receiving an instruction sent by the server, the reader performs information or message exchange with the tag, and sends information from the tag to the server. This operation is mainly for a case in which the reader does not view instruction content, and is only responsible for forwarding a message sent by the server to the tag and a message sent by the tag to the server. Therefore, in this scenario, the operation performed by the reader on the tag may be understood as an operation of performing message exchange with the tag). The instruction may include area location information, the identification information of the tag, and the like. The base station sends an access instruction to the tag. After random access of the tag succeeds, the base station sends an instruction to the tag (the base station may forward, to the tag, an instruction sent by the core network). The tag obtains or sends the corresponding information according to the instruction. For example, when the instruction is a counting instruction or to perform a counting operation, the tag sends the identification information of the tag; when the instruction is a read instruction or to perform a read operation, the tag sends data information stored in the storage area of the tag; and when the instruction is a write instruction or to perform a write operation, the tag stores, in the storage area of the tag, the data information that is to be written into the tag and that is included in the instruction. The base station sends (or forwards), to the core network, information sent by the tag, and the core network sends the information to the server. The core network performs an access management operation on the tag based on feedback information of the server.

A manner of sending the instruction by the server may be sending through a control plane channel. As shown in FIG. 3, the server sends an instruction to a tag management function or an internet of things management function. In this case, the server may be an AF, an application server (application server, AS), or a passive internet of things application function (P-IoT AF). In a possible implementation, the P-IoT AF sends an instruction to the tag management function or the internet of things management function. In another possible implementation, the P-IoT AF sends an instruction to the tag management function or the internet of things management function via a control plane device. The control plane device may be an NEF, an SMF, a PCF, a UDM, a network slice-specific and standalone non-public network (standalone non-public network, SNPN) authentication and authorization function (network slice-specific and SNPN authentication and authorization function, NSSAAF), or an AMF. In addition, the server may further send an instruction to the reader through a user plane channel. In a possible implementation, the server sends an instruction to the base station via the UPF. In a possible implementation, the server sends an instruction to the tag management function or the internet of things management function via a UPF and the SMF, and the tag management function or the internet of things management function sends the instruction to the tag via a RAN. In another possible implementation, the server sends an instruction to the reader via a user plane device and an access network device, for example, a RAN (when the reader is a terminal). In a possible implementation, the tag management function or the internet of things management function may be deployed together with or co-deployed with the core network device, the access network device, or the application function. When two devices or functions are co-deployed, interaction between the two functions or devices provided in embodiments of this application becomes an internal operation of an integrated function or device or may be omitted.

### 2. Tag-based random access procedure

In a tag counting procedure, a tag needs to perform random access (step 1 to step 4) in FIG. 4A, and send an EPC code to a reader/writer after the random access succeeds, so that the reader/writer can learn which tags are within coverage of the reader/writer. The information is finally reported by the reader/writer to middleware and a server. A read/write procedure is as generally follows:
Step 1: The reader/writer receives a counting command delivered by the server (the counting command may be delivered by the server to the middleware, and then delivered by the middleware to the reader/writer), generates a Select command, where the command carries a tag range (for example, EPC codes of some specific ranges), and delivers the Select command. After listening to the Select command, the tag determines whether the tag belongs to the tag range that needs to be determined in the Select command. If the tag belongs to the tag range, the tag feeds back information after receiving a Query or QueryRep command subsequently. If the tag does not belong to the tag range, no action is performed subsequently.
Step 2: The reader/writer sends a Query command. The Query command may include a value (denoted as a Q value). The tag generates a random number based on the Q value, for example, generates a random number between 0 to the Q^{th} power of 2. Then, the tag subtracts 1 from the random number each time the reader/writer sends a Query or QueryRep instruction. When the random number is reduced to zero, the tag initiates random access.
Step 3: When the tag finds that the tag itself belongs to the tag range selected in the Select command, the tag feeds back a random number RN16 (which may be understood as a random number with a length of 16 bits) to the reader/writer in a contention manner (for example, sending a random number RN16 to the reader/writer when the random number is reduced to zero in step 2).
Step 4: After receiving the random number sent by the tag, the reader/writer sends an ACK command, where the command includes the received random number (RN16).
Step 5: After receiving the ACK command sent by the reader and verifying that the random number is correct, the tag feeds back an EPC code of the tag to the reader/writer, to complete the counting procedure.

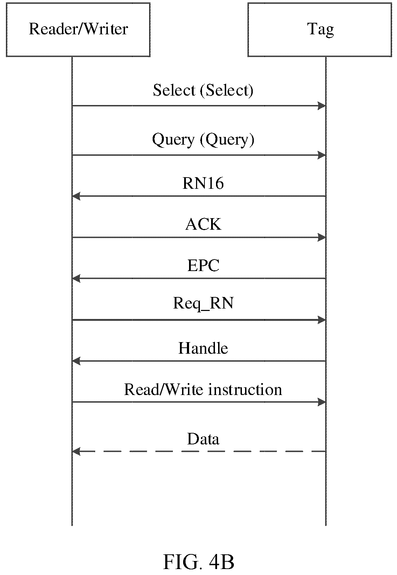

For a tag read/write procedure, in the read/write procedure, the reader/writer sets the tag range in the Select command as a range of tags on which reading/writing needs to be performed (for example, if the range in the Select command is a specific EPC code, the reader/writer performs a read/write operation on the tag corresponding to the EPC code). Step 1 to step 5 in FIG. 4B are a counting procedure, but the counting procedure is not a counting procedure of a group of tags, but counting performed on a specific tag. A procedure from step 6 is the read/write procedure, which is generally as follows:
Step 6: The reader/writer sends a Req_RN command to the tag, where the Req_RN command carries the previously received random number RN16.
Step 7: If the tag verifies that the random number is correct, the tag sends a handle to the reader/writer. The handle needs to be carried in the subsequent read/write procedure.
Step 8: The reader/writer sends a read or write command to the tag, where the command needs to carry the handle. If the read or write command is a write instruction, data to be written into the storage area of the tag further needs to be carried.
Step 9: If the command in step 8 is a read instruction, the tag needs to feed back data that is in the storage area of the tag, and further needs to carry the handle.

It should be noted that, a disable procedure of the tag is similar to this. In step 8, the tag performs disabling after receiving a disable instruction, and then optionally feeds back a handle in step 9.

### 3. Tag identifier

In a passive internet of things, there are two types of tag identifiers, one is EPC, and the other is tag identifier (tag identifier, TID). The former may be understood as an application identifier of the tag, and may be applied for by an enterprise to the International Article Coding Organization (GS1) standard organization. The EPC obtained through application to the GS1 standard organization is unique. In addition, the EPC of the tag may alternatively be assigned by the enterprise. In this case, the EPC assigned by the enterprise may not be unique. However, if the enterprise uses the EPC only in a park or within the enterprise, non-uniqueness of the EPC does not affect a service flow. The TID may be understood as a device identifier of the tag, which is similar to an existing international mobile equipment identity (international mobile equipment identity, IMEI) number of a mobile phone or a MAC address (media access control address) of the device, and is for identifying the tag device. The TID may be assigned by a tag manufacturer (or assigned by a standard organization) and written into the tag when the tag is produced.

### 4. Terminal identifier in 3GPP

The terminal identifier defined by 3GPP includes an SUPI, an SUCI, a GPSI, a GUTI, a G-TMSI, a 5G-S-TMSI, an IMEI, and an international mobile subscriber identity (international mobile subscriber identity, IMSI).

The SUPI is a unique permanent identifier of a terminal, and may include:
1. an IMSI;
2. a network-specific identifier (network-specific identifier, NSI), where a format of the NSI uses a format of a network access identifier (network access identifier, NAI), for example, username@realm;
3. a global cable identifier (global cable identifier, GCI) that uses an NAI format, where in this case, the GCI is for supporting a fixed network-broadband residential gateway (fixed network-broadband residential gateway, FN-BRG), and may further include an operator identifier of a 5GC operator; and
4. a global line identifier (global line identifier, GLI) in an NAI format, where in this case, the GLI is for supporting the fixed network-cable residential gateway (fixed network-cable residential gateway, FN-CRG) and a 5G-cable residential gateway (5G-cable residential gateway, 5G-CRG), and may further include an operator identifier of a 5GC operator.

The SUPI including the NSI uses an NAI format, for example, username@realm. The realm part is the same as the realm part in the NSI.

The SUCI may be understood as an encrypted SUPI.

Construction of the SUCI may include the following parts:
1. SUPI type (SUPI Type): The parameter includes a value from 0 to 7, and is for identifying a type corresponding to the SUPI encrypted by the SUCI; and the SUPI type is defined as follows:
   - 0: IMSI
   - 1: Network specific identifier (NSI)
   - 2: Global line identifier (GLI)
   - 3: Global cable identifier (GCI)
   - 4 to 7: Reserved values are for future use.
2. Home network identifier (home network identifier, HNI): Identifies a home network of a subscriber, where when the SUPI type is IMSI, the HNI includes two parts: a mobile country code (MCC) and a mobile network code (MNC); and when the SUPI type is NSI, GLI or GCI, the home network identifier (HNI) includes a string with variable length.
3. Routing indicator (Routing Indicator): Assigned by a home network operator, and allowed to be used together with the HNI. Network signaling carrying the SUCI is sent to the AUSF or the UDM to serve a subscriber.
4. Protection scheme identifier (Protection Scheme Identifier): Identifies a null-scheme (null-scheme) or a non-null scheme (non-null scheme). The non-null scheme is defined by a home network (HPLMN, in which the public land mobile network (public land mobile network, PLMN)).
5. Home network public key identifier (Home Network Public Key Identifier): If a null protection scheme is used, this value is also set to 0.
6. Scheme output (Scheme Output): Includes a string with a variable length, and depends on a used protection scheme.

From the structure of the SUCI, it can be learned that the SUCI itself can include identification information of a home network of a terminal (or UE). A role of the identification information is: When the UE performs a registration procedure, an AMF in a serving network (serving PLMN) of the UE selects, based on a home network identifier in the SUCI, an AUSF or a UDM network element of the home network to perform a security authentication procedure on the UE. A reason is that only the home network of the UE has subscription data of the UE. Therefore, it is necessary to select the AUSF and the UDM in the home network to perform the security authentication procedure on the UE.

In a different data network other than the 3GPP system, 3GPP subscription requires a generic public subscription identifier (GPSI). In the 3GPP system, an association between the GPSI and corresponding SUPI is stored in the subscription data. The GPSI is a public identifier used inside and outside the 3GPP system. The GPSI is a mobile subscriber integrated services digital network (mobile subscriber integrated services digital network, MSISDN) or external identifier. Refer to TS 23.003 [19]. If the subscription data includes the MSISDN, a same MSISDN value may be supported in both a 5GS and an EPS. The SUPI and the GPSI are not in one-to-one correspondence.

A purpose of using the 5G-GUTI in the 5G system is to reduce explicit use of a UE permanent identity, namely the SUCI, in communication and improve security. The 5G-GUTI includes two parts. A first part identifies an AMF that assigns the 5G-GUTI, and is a globally unique AMF ID (globally unique AMF identifier, GUAMI). A second part is a unique ID of the UE in the AMF, namely, a 5G-TMSI.

The IMEI is an international mobile equipment identity. Each mobile phone has only one IMEI code. The IMEI code is unique, posted on a sign on the back of the mobile phone, and is read and written in a memory of the mobile phone. The IMEI is also a "profile" and an "ID number" of the mobile phone in the manufacturer. The IMEI includes a 15-digit decimal number string.

As shown in the background, to enable a passive internet of things technology in a 3GPP system, a communication method is urgently needed to adapt to a design principle in 3GPP and realize access authentication of a passive internet of things tag in 3GPP. In actual implementation, to implement access of an internet of things terminal corresponding to a service requester in 3GPP to send, to the service requester, information about one or more internet of things terminals corresponding to the service requester, the following two embodiments may be used for understanding. A main difference between the two embodiments is whether there is a screening operation on information reported by the terminal. Details are as follows:

### Implementation 1

### Implementation 1.1: Construct mask information via a core network device (for example, an AMF, a tag management function, or an internet of things management function)

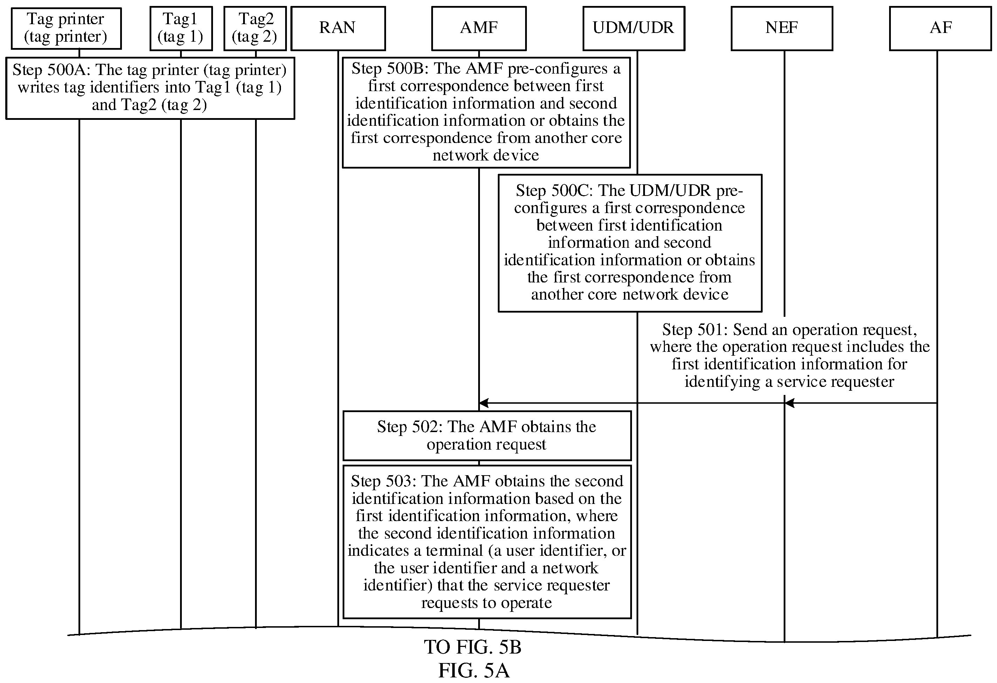

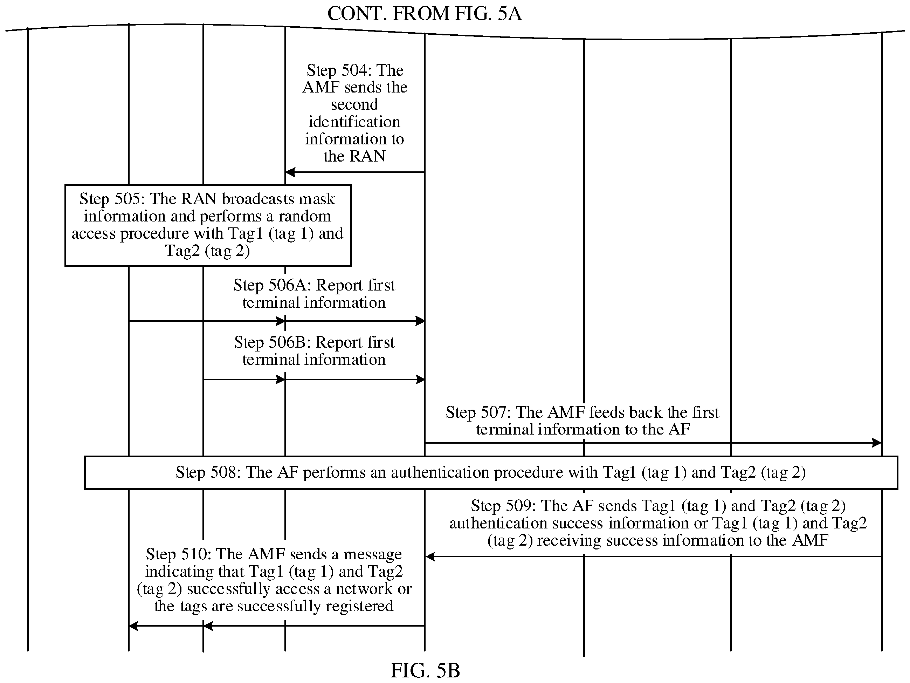

To enable a passive internet of things technology in a 3GPP system, an access network device may be configured to perform a part of operations of a reader/writer in the passive internet of things technology. Refer to FIG. 5A and FIG. 5B. The method may be performed by an access network device, may be performed by a core network device, or may be performed through interaction between the access network device, the core network device, and a service requester. The access network device may be a RAN, a TRP, a gNB, a pole station, a micro base station, an indoor base station, an IAB node, or the like. The core network device may include an AMF, a TMF, an NEF, a PCF, an NSSAAF, an AUSF, an SMF, a UDM, a UDR, or the like. The service requester may be an AF, an AS, or the like. This is not specifically limited in this application. Next, descriptions are provided based on interaction between a terminal (the terminal being in a tag form is used as an example) that the service requester requests to operate, the access network device, a first core network device, a second core network device, and the service requester. In FIG. 5A and FIG. 5B, terminals that the service requester requests to operate being Tag1 and Tag2 (only two tags are used as an example for description herein, however, a quantity of tags that the service requester requests to operate is not limited in actual application), the access network device being a RAN, the first core network device being an AMF, the second core network device being a UDM/UDR, the service requester being an AF, a tag printer (Tag Printer), and an NEF are used as an example for description. Certainly, in actual application, there may be a plurality of service requesters, and there may also be a plurality of core network devices (for example, enterprise A is distributed in different areas, a core network device that serves a terminal in area 1 of enterprise A is AMF1, and a core network device that serves a terminal in area 2 of enterprise A is AMF2) that serve a specific service requester and a plurality of access network devices. In addition, in some scenarios, an access procedure or an operation may be performed on a tag by using a terminal. In this case, the reader/writer may alternatively be presented as a terminal. This case is also applicable to the solution of this application, and is not specifically limited herein. Details are as follows:
Step 502: The AMF obtains an operation request of the service requester, where the operation request includes first identification information for identifying the service requester.

Optionally, the AMF may send a request message to the AF to obtain the operation request of the service requester. Alternatively, the AF may send a request message to the AMF via the NEF, and the AMF may obtain the operation request of the service requester based on the request message. Alternatively, the AMF obtains the operation request of the service requester from another core network device. This is not specifically limited in this application. The service requester may be understood as a user, an enterprise, an individual, an operation requester, or the like. This is not specifically limited in this application.

Optionally, the operation request may be understood as that the service requester requests to obtain information about a terminal of the service requester, for example, identification information or data information stored in the terminal. Optionally, the operation request may also indicate that the service requester requests to obtain information about a terminal of the service requester, for example, identification information or data information stored in the terminal. In this application, the operation request is used as an example for description. However, in actual application, the operation request may also be referred to as a service request, operation information, or the like. A type or a name of a message for sending the operation request is not limited in this application.

In FIG. 5A and FIG. 5B, step 501 in which the AF sends the operation request to the AMF via the NEF to enable the AMF to obtain the operation request of the service requester is used as an example for illustration.

The first identification information may include at least one of the following information: an identifier of the service requester, an application function identifier corresponding to the service requester, address information corresponding to the service requester, and port information corresponding to the service requester.

The operation request in step 501 may include an identifier of the service requester, for example, globally unique identification information of the service requester, globally unique identification information of an operator, or an application function identifier corresponding to the service requester, such as an AF ID, an AF identifier, or an AF identity, or a service identifier corresponding to the service requester, such as a service identifier, a service ID, a service identity, an APP ID, an APP identifier, or an APP identity. The operation request may include one or more of the foregoing information. The AMF may know or determine, based on the operation request, a service requester for which a corresponding operation needs to be performed. Certainly, the request message may not include the foregoing message. The AMF learns or determines the service requester by obtaining address information or port information of the operation request. In a possible implementation, address information or port information of the request message may be the port information or the address information corresponding to the service requester. In a possible implementation, the address information may include an IP address (for example, an IPv4 address, an IPv6 address, or an IPv6 prefix) or a MAC address. The port number information may include a transmission control protocol (transmission control protocol, TCP) port number or a user datagram protocol (user datagram protocol, UDP) port number.

In addition, the operation request in step 501 may include an instruction type, for example, inventory, counting, read, write, disabling, data obtaining, and paging, for example, terminal inventory, reading data in a storage area of a terminal, writing data into a storage area of a terminal, disabling a terminal, obtaining terminal data (which may be an identifier or storage area data), and paging a terminal. The operation request may include an identifier of the terminal, for example, an identifier of terminal 1 corresponding to the service requester, to perform an operation of a corresponding instruction type on terminal 1. In addition, the instruction type may not be included in the operation request. For example, the AMF is pre-configured. When the AF (or a specific AF) sends a message to the AMF, an operation is performed. For example, an inventory operation is pre-configured for the AMF. In this case, when the AF (or a specific AF) sends a message to the AMF, the AMF is triggered to indicate the RAN or the terminal to perform the inventory operation.

Step 503: The AMF obtains second identification information based on the first identification information, where the second identification information indicates a terminal that the service requester requests to operate.

In a possible implementation, when determining the second identification information based on the first identification information, the AMF may obtain the second identification information based on configuration information, or subscription data, a service configuration (for example, a service profile), or context information corresponding to the service requester. The AMF may obtain or determine the second identification information based on the foregoing information, and trigger, by using the second identification information, the access network device to perform an access procedure of the terminal of the service requester. In a possible implementation, the AMF may obtain the second identification information based on the first identification information sent by the AF. This is not specifically limited in this application. In FIG. 5A and FIG. 5B, an example in which the AMF obtains the second identification information based on the first identification information sent by the AF is used for description.

To ensure smooth execution of step 503, before step 501 is performed, step 500A, step 500B, or step 500C is further performed. Details are specifically as follows:
Step 500A: The tag printer writes tag identifiers into Tag1 and Tag2.

The tag printer may write a tag identifier, a security parameter, and the like into a tag. Optionally, the tag printer writes the tag identifier into the tag according to a rule or a negotiated rule. For example, if the tag identifier is constructed based on an EPC, one or more of a network identifier (for example, a PLMN ID and/or an NID) and a user identifier (for example, a user ID) may be written when the tag identifier is written into the EPC, so that the written tag identifier includes one or more of the PLMN ID, the NID, the user identifier, and the EPC code. In a possible implementation, the EPC may be replaced with another identifier (for example, a sequence number or an index number). To be specific, the field may be for identifying one or more terminals managed by the service requester, or the field may uniquely identify a terminal managed by the service requester. It can be understood that the field may alternatively be globally unique. This application is not limited. Alternatively, the user identifier may indicate the service requester. The user identifier may be constructed based on an actual requirement and has a correspondence with the service requester, or may be the identifier of the service requester, such as an AF ID, an AF identifier, an AF identity, an APP identifier, an APP identity, a service identifier, or a service identity. This application does not specifically limit a specific form of the user identifier. Certainly, in this embodiment of this application, an example in which the user identifier indicates the identifier corresponding to the service requester is used. In actual application, the user identifier may also be referred to as an identity, an application identifier, or the like. This is not specifically limited in this application. It should be noted that the user identifier is an implementation of indicating identification information of the service requester. In actual application, the identifier of the service requester may alternatively be indicated by using another identifier. The user identifier is merely used as an example herein. In addition, in this application, the user identifier in the implementation 1 and the implementation 2 may be understood as the identification information indicating the service requester. Details are not provided below.

If the tag identifier is a new type of terminal identifier, the service requester may write a corresponding tag identifier into a tag based on a tag identifier negotiated with the operator, or based on a tag identifier obtained from an operator (for example, a business & operation support system (business & operation support system, BOSS)).

Step 500B: The AMF pre-configures a first correspondence between the first identification information and the second identification information or obtains the first correspondence from another core network device.

Step 500C: The UDM/UDR pre-configures a first correspondence between the first identification information and the second identification information or obtains the first correspondence from another core network device.

In step 500B and step 500C, the another core network device may include an AMF, a TMF, a UDM, a UDR, an NEF, a PCF, an SMF, an NSSAAF, an AUSF, and the like. There is data exchange between the AMF performing step 500B and the UDM/UDR performing step 500C. The AMF performing step 500B may configure the first correspondence, or may obtain the first correspondence from the UDM/UDR performing step 500C. Certainly, when the first correspondence is obtained from the another core network device, when the another core network device is an AMF, the AMF performing step 500B is different from the AMF in the another core network device. When step 500C is performed, the UDM/UDR may configure a first correspondence. Certainly, when the first correspondence is obtained from the another core network device, when the another core network device is a UDM/UDR, the UDM/UDR performing step 500C is different from the UDM/UDR in the another core network device. The another core network device is not limited in this application. In a possible implementation, the first correspondence may be subscription data or a service configuration. For example, the subscription data or the service configuration includes the subscription data or the service configuration corresponding to the service requester. For example, the subscription data or the service configuration includes information about the service requester, and a network identifier and/or a user identifier corresponding to the service requester.

In addition, it should be further noted that when the solution of this application is performed for the first time, the AMF may generate the first correspondence between the first identification information and the second identification information based on the first identification information, and may store the first correspondence in the AMF, or may send the first correspondence to another core network device. In addition, the first correspondence may not always remain unchanged, and may be periodically updated with a change of the service requester or a change of the first identification information. This is not specifically limited in this application.

In a possible implementation, the second identification information includes mask information, where the mask information may include only a user identifier (User ID), or the mask information includes a network identifier (PLMN ID and/or NID) and the user identifier. The first correspondence may be shown in the following Table 1. The first correspondence may be a correspondence between the second identification information and any one or more pieces of information included in the first identification information. For example, AF1 corresponds to PLMN22 + User1, address 1 corresponds to PLMN22 + NID1 + User2, and port 2 corresponds to User3. Details are not described herein in this application. Table 1 is merely an example for describing the first correspondence.

**Table 1**

| First identification information | Second identification information |
|---|---|
| AF1 | PLMN22 + User1 of a service requester |
| Address 1 corresponding to the service requester | PLMN22 + NID1 + User2 of the service requester |
| Port 2 corresponding to the service requester | User3 |
| AF2 | PLMN20 + User13 |
| ... | ... |

In a possible implementation, when the AMF configures the first correspondence, in step 502, the AMF may obtain the second identification information based on the first correspondence and the first identification information. That is, after obtaining the user identifier (or the user identifier and the network identifier) based on the first identification information and the first correspondence, the AMF constructs the mask information, for example, constructs the mask information based on PLMN20 + User13 corresponding to AF2 in Table 1, to indicate the RAN that serves the service requester to perform an access procedure. In a possible implementation, the AMF sends the second identification information (or the mask information) to the RAN to ensure security of the information, for example, to prevent the access network device from knowing specific identification information of a terminal performing a random access procedure. The access network device only broadcasts information, and does not need to specifically learn which terminals need to be operated. After receiving a broadcast message and reporting an identifier of a terminal (for example, reporting the identifier by using a non-access stratum message), the terminal may perform screening and determining via the AMF. When the mask information is constructed, the network identifier and the user identifier may be standardized into a same format. Optionally, after the mask information is obtained, encrypted mask information may be obtained through encrypted construction. A specific manner of constructing the mask information is not specifically limited in this application. For example, the mask information is MASK=0020XXXX or MASK=0020. For example, when the mask information is 0020XXXX, it may indicate that a terminal with a terminal identifier beginning with 0020 needs to participate in the access procedure. In a possible implementation, the mask information may indicate a part of fields of the identifier of the terminal. The part of fields may be a start part, a middle part, or an end part of the identifier of the terminal. In a possible implementation, the AMF may further send one or more of a storage area location, a start location, an end location, and length information to the. For example, the storage area location may indicate a location of a terminal storage area in which a field matched by the mask information is located. For example, the start location may indicate a start location of the terminal storage area in which the field matched by the mask information is located. The end location may indicate an end location of the terminal storage area in which the field matched by the mask information is located. The length information may indicate a length of the field matched by the mask information.

In addition, if the user identifier is the identifier of the service requester or the application function identifier corresponding to the service requester, step 500B and step 500C may not be performed.

Step 504: The AMF sends the second identification information to the RAN, to trigger the RAN to perform the access procedure of the terminal to the access network device.

Optionally, the AMF further sends access indication information to the RAN, where the access indication information is for triggering the RAN to perform the access procedure of the terminal. The access indication information may indicate one or more of the following information: the access network device starting to perform the access procedure; the access network device performing a first-mode access procedure; or the access network device performing a second-mode access procedure. The indication may be understood as directly indicating one or more of the foregoing information, or may be understood as including information indicating the foregoing operation. This is not specifically limited in this application.

In a possible implementation, the access indication information may be indication information for starting a random access procedure, or access procedure mode information. The access procedure mode information may indicate a mode of the access procedure performed by the access network device. For example, the access procedure mode information may include the first-mode access procedure, or the second-mode access procedure.

In a possible implementation, the first-mode access procedure may be that after completing an access procedure of a first terminal, the access network device continues to perform an access procedure of a second terminal without obtaining indication information of the first core network device. The second-mode access procedure may be that after completing an access procedure of a first terminal, the access network device continuing to perform an access procedure of a second terminal with a need of obtaining indication information of the first core network device. In another possible implementation, the access indication information may indicate the RAN to perform random access of the terminal, and may be random access mode indication information or indication information indicating to start performing random access. The random access mode indication information may include indicating the RAN to continuously perform random access (to be specific, after completing a random access procedure of a current terminal, the RAN may immediately start a random access procedure of a next terminal), or indicating the RAN to perform a random access procedure of a next terminal under an instruction of the AMF (to be specific, after completing a random access procedure of a current terminal, the RAN needs to wait for indication information of an AMF before performing a random access procedure of a next terminal). This is not specifically limited in this application. Optionally, the access indication information and the second identification information may be carried in an NGAP message or an N2 message for sending.

In a possible implementation, the first access mode procedure may be referred to as a continuous access mode or a continuous access procedure. In another possible implementation, the second access mode procedure may be referred to as a discontinuous access mode (or a discontinuous access procedure), a to-be-indicated access mode (or a to-be-indicated access procedure), a trigger-indicated access mode (or a trigger-indicated access procedure), or the like. Specific names of the first access mode procedure and the second access mode procedure are not limited in this application.

Step 505: The RAN broadcasts the mask information, and performs a random access procedure with Tag1 and Tag2.

Optionally, the mask information may be none or null (or understood as unlimited), or may be MASK=X or *, indicating that random access can be performed on any tag. In a possible implementation, X may be NULL (which may be understood as null).

Step 506A: Tag1 reports first terminal information to the AMF.

Step 506B: Tag2 reports first terminal information to the AMF.

In a possible implementation, Tag1 is used as an example for description. For Tag2, refer to Tag1 for understanding. Tag1 sends a non-access stratum message (the first terminal information) (for example, a NAS message) to the AMF, where the non-access stratum message includes a Tag 1 identifier. The non-access stratum message may be a non-access stratum request message, a non-access stratum registration request message, a non-access stratum access request message, or the like. In another possible implementation, Tag1 sends a request message (the first terminal information) to the AMF, where the request message includes a Tag1 identifier. The request message may be a registration request message, an access request message, or the like. Tag1 sends the message so that Tag1 can perform a registration procedure or an access procedure.

In addition, the Tag1 identifier sent by Tag1 may be constructed based on the EPC or a new identifier. When the Tag1 identifier is constructed based on the EPC, the Tag1 identifier may include one or more of the following fields or information: <PLMN ID>, <NID>, <user identifier>, <SUPI type>, <assignment mode>, <category>, and <EPC>. The PLMN ID, the NID, and the user identifier are described above. A value or a character string corresponding to the SUPI type may indicate that the identifier corresponds to a passive internet of things terminal or an internet of things terminal, or that the identifier is based on the EPC. The assignment mode (assignment mode) may indicate whether the EPC code corresponds to a globally unique EPC or a customized EPC code. For example, when the assignment mode indicates a coordinated assignment mode (when the coordinated assignment mode is required), the EPC code is globally unique, or a combination of the EPC code and the PLMN ID and/or the NID is globally unique. When the assignment mode indicates self-assignment (a self-assignment mode), the EPC code is assigned by the service requester and may not be globally unique. A representation form of the assignment mode is not limited in this application, and may be a form of a bit (0 or 1), a character string, a number, or the like. The category may indicate a type corresponding to the passive internet of things terminal or the internet of things terminal, for example, indicate that the passive internet of things terminal or the internet of things terminal is various types of terminals such as a passive terminal, a semi-passive terminal, a passive terminal with energy storage, a semi-passive terminal with energy storage, a semi-active terminal, an active terminal, or the like. A representation form of the category may be a number, a bit, a character string, or the like. This is not specifically limited in this application. When the Tag1 identifier is a newly defined identifier, a construction form of the Tag1 identifier may include one or more of the following fields or information: <PLMN ID>, <NID>, <user identifier>, <SUPI type>, <assignment mode>, <category>, and <TID>. The PLMN ID, the NID, and the user identifier are described above. A value or a character string corresponding to the SUPI type may indicate that the identifier corresponds to a passive internet of things terminal or an internet of things terminal, or that the identifier is based on the TID. For example, the SUPI type may further indicate a type of the terminal identifier or indicate an identifier based on which the terminal identifier is constructed, for example, constructed based on an EPC, a TID, or another identifier. In a possible implementation, the TID may be the Tag1 identifier, that is, for identifying the tag, the passive internet of things terminal, or the internet of things terminal. Alternatively, the TID may be a device identifying the passive internet of things terminal or the internet of things terminal, that is, a device identifier. The TID may be globally unique or assigned by the service requester (not necessarily globally unique). The assignment mode may alternatively indicate an assignment mode of the TID, and the assignment mode is as described in the foregoing EPC part. The category may indicate a type corresponding to the passive internet of things terminal (or the internet of things terminal), for example, indicate that the passive internet of things terminal (or the internet of things terminal) is various types of terminals such as a passive terminal, a semi-passive terminal, a passive terminal with energy storage, a semi-passive terminal with energy storage, an active terminal, or the like. A representation form of the category may be a number, a bit, a character string, or the like. This is not specifically limited in this application.

Step 507: The AMF sends or feeds back the first terminal information to the AF.

If the AMF determines that the tag identifier in the first terminal information is constructed based on the EPC code, the AMF may obtain a target EPC code, and send the target EPC code to the service requester. The AMF may further obtain second terminal information (an identifier (such as an SUCI/SUPI) constructed by 3GPP or a terminal identifier additionally identified by the core network device) based on the tag identifier in the first terminal information. Optionally, the second terminal information includes one or more of the following information: an SUCI, an SUPI, a 5G-GUTI, a TMSI, a 5G-S-TMSI, a GPSI, an EPC, a network identifier, and identification information indicating the service requester. In a possible implementation, the AMF may interact with the UDM/UDR based on the obtained SUCI/SUPI to obtain context information corresponding to the SUCI/SUPI, for example, information such as a security authentication manner and a charging mode of a tag. In another possible implementation, the AMF obtains, via the UDM, the SUCI/SUPI and/or the context information corresponding to the EPC-based tag identifier. The AMF may send the tag identifier to the AF via the NEF (or the SMF or the UPF).

Step 508: The AF performs an authentication procedure with Tag1 and Tag2, where an authentication message between the AF and Tag1 and an authentication message between the AF and Tag2 may be transmitted via the RAN or the AMF.

Step 509: The AF sends Tag1 and Tag2 authentication success information or Tag1 and Tag2 receiving success information to the AMF.

Optionally, the AF may send the information to the AMF via the NEF (or the SMF or the UPF).

Step 510: The AMF sends a message indicating that Tag1 and Tag2 successfully access a network or the tags are successfully registered.

Optionally, the AF may send the information to the AMF via the NEF (or the SMF or the UPF).

In a possible implementation, the AMF sends a registration acceptance message to the tag. In a possible implementation, the AMF sends an access success message to the tag.

In this application, the core network device indicates, to the access network device (for example, a base station), information about selecting a terminal (or an internet of things terminal, or a tag in a passive internet of things technology) corresponding to the service requester, so that the access network device (for example, the base station) can more accurately select the terminal to participate in a current terminal random access procedure in a process of performing terminal random access, thereby reducing successful random access of an unrelated terminal, and avoiding cross-enterprise unauthorized inventory or a waste of network resources. In addition, the core network device indicates information about terminal selection to the access network device (for example, the base station), so that the access network device (for example, the base station) can be prevented from directly sensing terminal identification information (to be specific, indicating, to the access network device (for example, the base station), that the information about the terminal selection is a terminal identifier range rather than a specific terminal identifier), thereby reducing potential security and privacy risks. Moreover, the core network device may be compatible with different terminal identifier types (for example, whether the terminal identifier is based on the EPC or the newly defined terminal identifier). For example, when the terminal identifier is based on the EPC code, the core network device may further extract the EPC code and obtain, based on the terminal identifier, the SUCI/SUPI corresponding to the terminal identifier, to update the subscription data, the service configuration, or the context information, or obtain the corresponding subscription data, service configuration, or context information, and send the EPC code to the service requester. Without affecting the service configuration of the existing service requester that has adopted the EPC code, the terminal of the service requester is enabled to access a core network, so that the service requester can obtain both a 5G service and a passive internet of things service (or an internet of things service) by deploying a set of network systems.

Implementation 1.2: Construct mask information via an access network device (for example, a base station or a RAN)

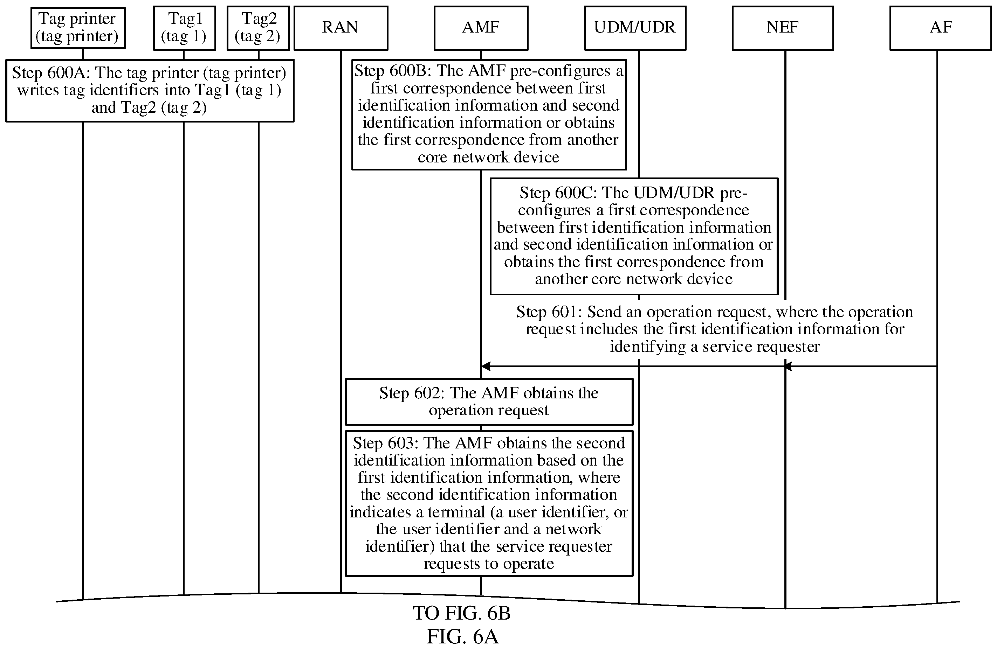

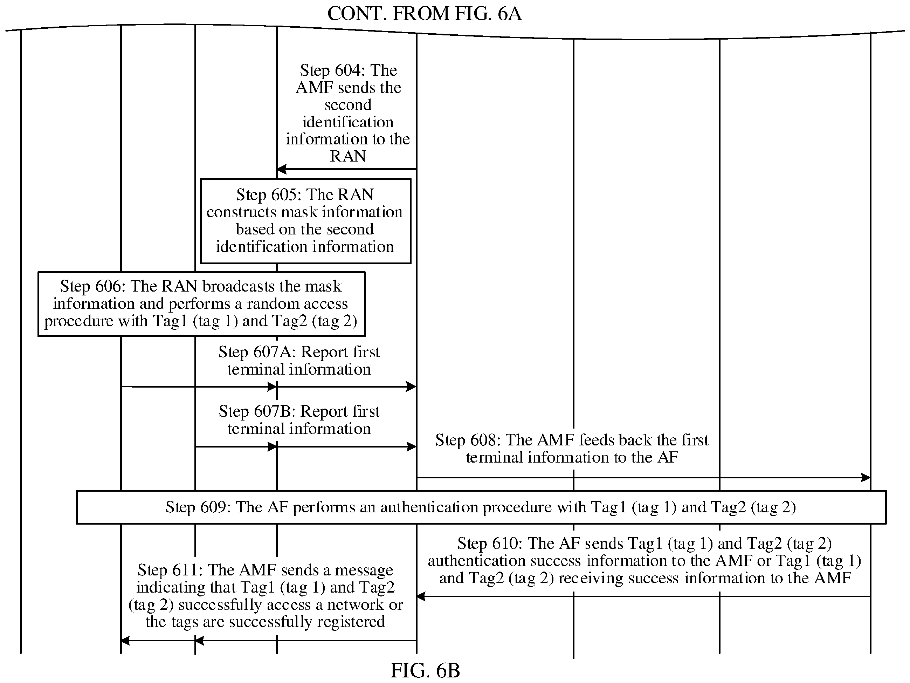

The foregoing example of FIG. 5A and FIG. 5B can be understood as follows that the core network device explicitly indicates information for selecting a tag. In FIG. 6A and FIG. 6B, a core network device does not explicitly indicates the information for selecting a tag, and an access network device may obtain, generate, or determine the information for selecting the tag. In FIG. 6A and FIG. 6B, terminals that the service requester requests to operate being Tag1 and Tag2 (only two tags are used as an example for description herein, but a quantity of terminals that the service requester requests to operate and a terminal type or a device form are not limited in actual application), the access network device being a RAN, the first core network device being an AMF, the second core network device being a UDM/UDR, the service requester being an AF, a tag printer (Tag Printer), and an NEF are used as an example for description. Certainly, in actual application, there may be a plurality of service requesters, and there may also be a plurality of core network devices (for example, enterprise A is distributed in different areas, a core network device that serves a terminal in area 1 of enterprise A is AMP1, and a core network device that serves a terminal in area 2 of enterprise A is AMF2) that serve a specific service requester and a plurality of access network devices. Details are as follows:
Step 601: The AF sends an operation request to the AMF via the NEF, where the operation request includes first identification information for identifying the service requester.

This step may be understood with reference to step 501, and details are not described herein again.

Step 602: The AMF obtains the operation request of the service requester.

This step may be understood with reference to step 502, and details are not described herein again.

Step 603: The AMF obtains second identification information based on the first identification information, where the second identification information indicates a terminal that the service requester requests to operate.

To ensure smooth execution of step 603, before step 601 is performed, step 600A, step 600B, and step 600C are further performed. Details are specifically as follows:
Step 600A: The tag printer writes tag identifiers into Tag1 and Tag2.

This step may be understood with reference to step 500A, and details are not described herein again.

Step 600B: The AMF pre-configures a first correspondence between the first identification information and the second identification information or obtains the first correspondence from another core network device. This step may be understood with reference to step 500B, and details are not described herein again.

Step 600C: The UDM/UDR pre-configures a first correspondence between the first identification information and the second identification information or obtains the first correspondence from another core network device. This step may be understood with reference to step 500C, and details are not described herein again.

Step 604: The AMF sends the second identification information to the RAN.

Optionally, the AMF further sends access indication information to the RAN, where the access indication information is for triggering the RAN to perform the access procedure of the terminal. The access indication information may be understood with reference to the foregoing access indication information, and details are not described herein again.

Step 605: The RAN constructs mask information based on the second identification information.

For example, when the mask information is constructed, the network identifier and the user identifier are standardized into a same format. Optionally, after the mask information is obtained, encrypted mask information may be obtained through encrypted construction. A specific manner of constructing the mask information is not specifically limited in this application. For example, the mask information is MASK=0020XXXX or MASK=0020.

Step 606: The RAN broadcasts the mask information, and performs a random access procedure with Tag1 and Tag2.

Step 607A: Tag1 reports first terminal information to the AMF.

Step 607B: Tag2 reports first terminal information to the AMF.

Step 608: The AMF sends or feeds back the first terminal information to the AF.

This step may be understood with reference to step 507 in FIG. 5A and FIG. 5B, and details are not described herein again.

Step 609: The AF performs an authentication procedure with Tag1 and Tag2, where an authentication message between the AF and Tag1 and an authentication message between the AF and Tag2 may be transmitted via the RAN or the AMF.

Step 610: The AF sends Tag1 and Tag2 authentication success information or Tag1 and Tag2 receiving success information to the AMF.

Optionally, the AF may send the information to the AMF via the NEF (or the SMF or the UPF).

Step 611: The AMF sends a message indicating that Tag1 and Tag2 successfully access a network or the tags are successfully registered.

Compared with the embodiment in FIG. 5A and FIG. 5B, the core network device does not need to indicate information about terminal selection to the base station each time performing a terminal operation initiated by a same service requester, so that network resource overheads can be reduced.

### Implementation 2

### Implementation 2.1: Construct mask information via an AMF

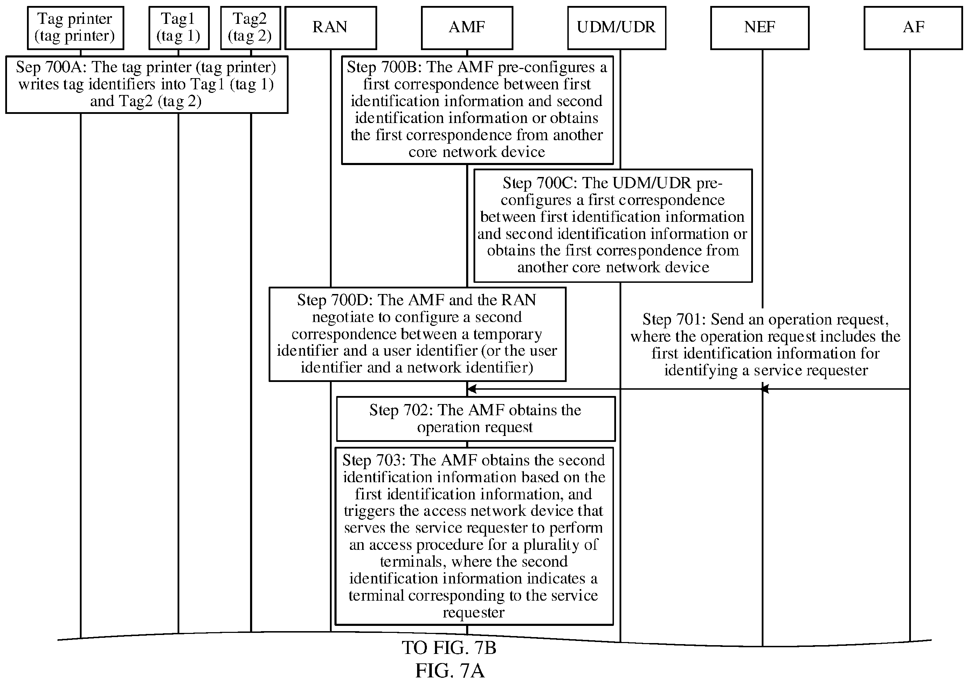

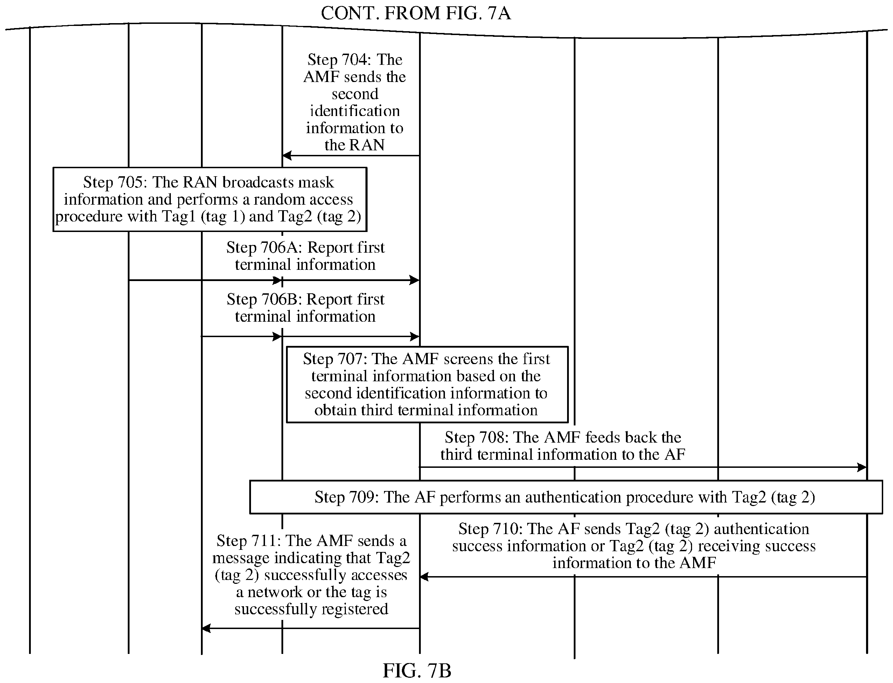

This implementation may be performed with reference to FIG. 7A and FIG. 7B. The method may be performed by an access network device, may be performed by a core network device, or may be performed through interaction between the access network device, the core network device, and a service requester. The access network device may be a RAN, a TRP, a gNB, a pole station, a micro base station, an indoor pole station, an IAB node, or the like. The core network device may include an AMF, a TMF, an NEF, a PCF, an NSSAAF, an AUSF, an SMF, a UDM, a UDR, or the like. The service requester may be an AF, an AS, or the like. This is not specifically limited in this application. Next, descriptions are provided based on interaction between a terminal (which may be understood as the foregoing tag), the access network device, a first core network device, a second core network device, and the service requester. In FIG. 7A and FIG. 7B, tags being Tag1 and Tag2 (only two tags are used as an example for description herein, but a quantity of tags is not limited in actual application), the access network device being a RAN, the first core network device being an AMF, the second core network device being a UDM/UDR, the service requester being an AF, a tag printer (Tag Printer), and an NEF are used as an example for description. Certainly, in actual application, there may be a plurality of service requesters, and there may also be a plurality of core network devices (for example, enterprise A is distributed in different areas, a core network device that serves a terminal in area 1 of enterprise A is AMF1, and a core network device that serves a terminal in area 2 of enterprise A is AMF2) that serve a specific service requester and a plurality of access network devices. Details are as follows:
Step 701: The AF sends an operation request to the AMF via the NEF, where the operation request includes first identification information for identifying the service requester. This step may be understood with reference to step 501, and details are not described herein again.
Step 702: The AMF obtains the operation request of the service requester.

This step may be understood with reference to step 502, and details are not described herein again.

Step 703: The AMF obtains second identification information based on the first identification information, and triggers the access network device that serves the service requester to perform an access procedure for a plurality of terminals, where the second identification information indicates a terminal corresponding to the service requester.

In a possible implementation, when determining the second identification information based on the first identification information, the AMF may obtain the second identification information based on configuration information, or subscription data or a service configuration corresponding to the service requester. The AMF may obtain or determine the second identification information based on the foregoing information, and trigger, by using the second identification information, the access network device to perform an access procedure of the terminal of the service requester. In a possible implementation, the AMF may obtain the second identification information based on the first identification information sent by the AF. This is not specifically limited in this application. In FIG. 7A and FIG. 7B, an example in which the AMF obtains the second identification information based on the first identification information sent by the AF is used for description.

In a possible implementation, the access network device that serves the service requester may be dedicated to the service requester, or may reserve, in a slice isolation resource manner, a specific radio resource for the service requester to use. In another possible implementation, the access network device that serves the service requester may be allowed to be used by the service requester, or may be understood as that a coverage area of the access network device includes a range in which the service requester allows performing an operation.

To ensure smooth execution of step 703, before step 701 is performed, step 700A, step 700B, step 700C, or step 700D is further performed. Details are specifically as follows:
Step 700A: The tag printer writes tag identifiers into Tag1 and Tag2.

This step may be understood with reference to step 500A, and details are not described herein again.

Step 700B: The AMF pre-configures a first correspondence between the first identification information and the second identification information or obtains the first correspondence from another core network device.

Step 700C: The UDM/UDR pre-configures a first correspondence between the first identification information and the second identification information or obtains the first correspondence from another core network device.

In step 700B and step 700C, the another core network device may include an AMF, a TMF, a UDM, a UDR, an NEF, a PCF, an SMF, an NSSAAF, an AUSF, and the like. There is data exchange between the AMF performing step 700B and the UDM/UDR performing step 500C. The AMF performing step 700B may configure the first correspondence by itself, or may obtain the first correspondence from the UDM/UDR performing step 500C. Certainly, when the first correspondence is obtained from the another core network device, when the another core network device is an AMF, the AMF performing step 500B is different from the AMF in the another core network device. When step 700C is performed, the UDM/UDR may configure a first correspondence. Certainly, when the first correspondence is obtained from the another core network device, when the another core network device is an AMF, the AMF performing step 500B is different from the AMF in the another core network device. When the another core network device is a UDM/UDR, the UDM/UDR performing step 500C is different from the UDM/UDR in the another core network device. The another core network device is not limited in this application. In a possible implementation, the first correspondence may be subscription data or a service configuration. For example, the subscription data or the service configuration includes the subscription data corresponding to the service requester. For example, the subscription data or the service configuration includes information about the service requester, and a network identifier and/or a user identifier corresponding to the service requester.

In a possible implementation, the second identification information includes a user identifier, and/or an event identifier (Event ID) or a transaction identifier (for example, a transaction ID). There is a correspondence between the second identification information and the service requester. It can be understood that there is a correspondence between the user identifier and the service requester, there is a correspondence between the event identifier (or the transaction identifier) and the service requester, or there is a correspondence among the user identifier, the event identifier (or the transaction identifier), and the service requester. If an event identifier Event3 is inventoried for an identifier of a terminal of enterprise 1, if the second identification information includes Event3, information about enterprise 1 may be known. Based on this, the identifier of the terminal belonging to enterprise 1 may be obtained through screening. For example, if the event identifier Event3 is inventoried for identifiers of terminals in a specific range of enterprise 1 (for example, terminal identifier 1, terminal identifier 3, and terminal identifier 5), if the second identification information includes Event3, identification information (for example, terminal identifier 1, terminal identifier 3, and terminal identifier 5) of the terminals in the specific range of enterprise 1 may be known. Based on this, the identifiers of the terminals belonging to the specific range of enterprise 1 may be obtained through screening (for example, terminal identifier 1 and terminal identifier 3 are obtained through screening terminal identifier 1, terminal identifier 2, and terminal identifier 3). If transaction identifier 3 is for performing a random access operation on a terminal of enterprise 2, the AMF may determine information about enterprise 2 based on transaction identifier 1, and obtain, through screening based on the information about enterprise 2, an identifier of the terminal that belongs to enterprise 2. For example, if the transaction identifier transaction3 is inventoried for identifiers of terminals in a specific range of enterprise 2 (for example, terminal identifier 2, terminal identifier 3, and terminal identifier 6), if the second identification information includes the transaction identifier transaction3, identification information (for example, terminal identifier 2, terminal identifier 3, and terminal identifier 6) of the terminals in the specific range of enterprise 2 may be known. Based on this, identifiers of the terminals belonging to the specific range of enterprise 2 may be obtained through screening (for example, terminal identifier 2, terminal identifier 3, and terminal identifier 6 are obtained through screening terminal identifier 2, terminal identifier 3, terminal identifier 5, and terminal identifier 6). If an NGAP identifier corresponds to information about enterprise 3, the AMF may obtain, through screening based on the NGAP identifier, an identifier of a terminal corresponding to enterprise 3. For example, if NGAP identifier 1 is inventoried for identifiers of terminals in a specific range of enterprise 3 (for example, terminal identifier 1, terminal identifier 7, and terminal identifier 10), if the second identification information includes NGAP identifier 1, identification information (for example, terminal identifier 1, terminal identifier 7, and terminal identifier 10) of the terminals in the specific range of enterprise 3 may be known. Based on this, the identifiers of the terminals belonging to the specific range of enterprise 3 may be obtained through screening (for example, terminal identifier 1 is obtained through screening terminal identifier 1 and terminal identifier 2). This is not specifically limited in this application. Table 2 is used as an example for description. AF1 corresponds to event identifier 1, address 1 corresponds to transaction identifier 2, port 2 corresponds to NGAP identifier 3, and the like. Details are not described herein in this application. Table 2 is merely an example for describing the first correspondence.

**Table 2**

| First identification information | Second identification information |
|---|---|
| AF1 | Event identifier 1 |
| Address 1 corresponding to the service requester | Transaction identifier 2 |
| Port 2 corresponding to the service requester | NGAP identifier 3 |
| AF2 | Event identifier 2 + NGAP identifier 3 |
| AF2 | Transaction identifier 2 + user identifier |
| AF1 terminal 1, terminal 3, and terminal 5 | Event identifier 3 |
| AF2 terminal 2, terminal 3, and terminal 6 | Transaction identifier 3 |
| AF3 terminal 1, terminal 7, and terminal 10 | NGAP identifier 1 |
| ... | . |

In a possible implementation, when the service requester sends the operation request to the AMF for the first time, sends an operation request of a specific type for the first time, or sends an operation request for terminals (for example, terminal identifier 1, terminal identifier 3, and terminal identifier 5 of enterprise 1 in the foregoing example) in a specific range, the AMF may generate an event identifier, a transaction identifier, or an NGAP identifier. For example, the event identifier, the transaction identifier, or the NGAP identifier may indicate or represent the specific operation request, the operation request of the specific type, the operation request for the terminals in the specific range, or the like. In one possible implementation, the AMF stores a correspondence between the event identifier, the transaction identifier, or the NGAP identifier and a user identifier (or mask information) and/or a terminal identifier in a specific range. The second identification information sent by the AMF to the RAN may include the event identifier, the transaction identifier, or the NGAP identifier, and the user identifier (or the mask information). In one possible implementation, the RAN may store a correspondence between the event identifier, the transaction identifier, or the NGAP identifier and a user identifier (or mask information). Subsequently, when the service requester sends a same operation request to the AMF again, the AMF may send the event identifier, the transaction identifier, or the NGAP identifier to the RAN, and the RAN may obtain the corresponding user identifier or mask information based on the event identifier, the transaction identifier, or the NGAP identifier.

In another possible implementation, when the service requester sends the operation request to the AMF, the AMF may generate the event identifier, the transaction identifier, the NGAP identifier, or a user identifier. For example, the event identifier, the transaction identifier, the NGAP identifier, or the user identifier has a correspondence with the operation request or the terminal indicated by the operation request. For example, the AMF stores or records that the event identifier, the transaction identifier, the NGAP identifier, or the user identifier has a correspondence with the operation request or the terminal indicated by the operation request. The second identification information sent by the AMF to the RAN may include the event identifier, the transaction identifier, the NGAP identifier, or the user identifier. Subsequently, when the RAN completes a terminal access procedure and sends, to the AMF, first terminal information reported by one or more first terminals, the RAN may further send the event identifier, the transaction identifier, the NGAP identifier, or the user identifier to the AMF, so that the AMF obtains, based on the event identifier, the transaction identifier, the NGAP identifier, or the user identifier, the corresponding operation request or the terminal indicated by the operation request, and selects, from the first terminal information, terminal information that needs to be reported to the service requester.

In a possible implementation, the event identifier, the transaction identifier, or the NGAP identifier may all be referred to as a temporary identifier.

Step 700D: The AMF and the RAN negotiate to configure a second correspondence between a temporary identifier (for example, the event identifier, the transaction identifier, or the NGAP identifier) and the user identifier (or a user identifier and a network identifier, or mask information).

The second correspondence may be shown in the following Table 3. NGAP 1 corresponds to PLMN22 + User1, event identifier 1 corresponds to NID1 + User1, transaction identifier 2 corresponds to User2, NGAP4 + event identifier 3 corresponds to PLMN20 + User3, and the like. Details are not described herein in this application. Table 3 is merely an example for describing the second correspondence.

**Table 3**

| Temporary identifier | User identifier, network identifier + user identifier |
|---|---|
| NGAP 1 | PLMN22 + User1 of the service requester |
| Event identifier 1 | NID1 + User1 of the service requester |
| Transaction identifier 2 | User2 |
| NGAP4 + event identifier 3 | PLMN20 + User3 |
| ... | ... |

In a possible implementation, when the AMF configures the first correspondence, the AMF may obtain or generate the second identification information based on the first correspondence and the information about the service requester. In other words, the AMF obtains the temporary identifier based on the first identification information and the first correspondence. Then, the AMF may obtain the user identifier based on the second correspondence and the temporary identifier.

Optionally, in a configuration negotiation process between the RAN and the AMF, the following information may be sent to the RAN together with the second identification information: a GUAMI of the AMF, and information corresponding to the AF or the service requester, for example, one or more of the following information: an AF identifier, a user identifier, a tag identifier range, a PLMN ID, an NID, an IP address, and port information.

In a possible implementation, when the AMF configures the first correspondence, in step 702, the AMF may obtain the second identification information based on the first correspondence and the first identification information. That is, after obtaining the user identifier (or the user identifier and the network identifier) based on the first identification information and the first correspondence, the AMF constructs the mask information, for example, constructs the mask information based on PLMN20 corresponding to AF2 in Table 1, to indicate the RAN that serves the service requester to perform an access procedure. In a possible implementation, the AMF sends the second identification information (or the mask information) to the RAN to ensure security of the information, for example, to prevent the access network device from knowing specific identification information of a terminal performing a random access procedure. The access network device only broadcasts information, and does not need to specifically learn which terminals need to be operated. After receiving a broadcast message and reporting an identifier of a terminal (for example, reporting the identifier by using a non-access stratum message), the terminal performs screening and determining via the AMF. When the mask information is constructed, the network identifier and the user identifier may be standardized into a same format. Optionally, after the mask information is obtained, encrypted mask information may be obtained through encrypted construction. A specific manner of constructing the mask information is not specifically limited in this application. For example, the mask information is MASK=0020XXXX or MASK=0020.

In addition, if the user identifier is the identifier of the service requester or the application function identifier corresponding to the service requester, step 700B and step 700C may not be performed.

Step 704: The AMF sends the second identification information to the RAN, to trigger the RAN to perform the access procedure of the terminal to the access network device.

This step may be understood with reference to step 504, and details are not described herein again.

Step 705: The RAN broadcasts the mask information, and performs a random access procedure with Tag1 and Tag2.

Step 706A: Tag1 reports first terminal information to the AMF.

In a possible implementation, when sending, to the AMF, the first terminal information reported by Tag1, the RAN may further send the second identification information (for example, the event identifier, the transaction identifier, or the NGAP identifier).

Step 706B: Tag2 reports first terminal information to the AMF.

In a possible implementation, when sending, to the AMF, the first terminal information reported by Tag2, the RAN may further send the second identification information (for example, the event identifier, the transaction identifier, or the NGAP identifier).

This step may be understood with reference to step 506A and step 506B, and details are not described herein again.

Step 707: The AMF screens the first terminal information based on the second identification information to obtain third terminal information.

In a possible implementation, if the RAN sends the second identification information (for example, the event identifier, the transaction identifier, or the NGAP identifier) to the AMF, the AMF may screen the first terminal information based on the second identification information (for example, the event identifier, the transaction identifier, or the NGAP identifier) and a correspondence between the second identification information (for example, the event identifier, the transaction identifier, or the NGAP identifier) and the operation request or the terminal indicated by the operation request, to obtain the third terminal information.

Step 708: The AMF reports the third terminal information to the AF, where the third terminal information is terminal information that is obtained by the AMF by screening the first terminal information and that needs to be reported to the AF.

For example, if the AMF determines, based on the second identification information, that Tag1 is not a subscribed terminal of the service requester, an identifier of Tag1 is not reported; and if the AMF determines, based on the second identification information, that Tag2 is a subscribed terminal of the service requester, an identifier of Tag2 is reported.

In addition, the second identification information may also be referred to as screening information. This is not specifically limited in this application. In addition, the second identification information does not always remain unchanged, but can dynamically change, for example, is determined or directly obtained based on a request message sent by the AF.

Step 709: The AF performs an authentication procedure with Tag2, where an authentication message between the AF and Tag2 may be transmitted via the RAN or the AMF.

Step 710: The AF sends Tag2 authentication success information or Tag2 receiving success information to the AMF.

Optionally, the AF may send the information to the AMF via the NEF (or the SMF or the UPF).

Step 711: The AMF sends a message indicating that Tag2 successfully accesses a network or the tag is successfully registered.

Optionally, the AF may send the information to the AMF via the NEF (or the SMF or the UPF).

In a possible implementation, the AMF sends a registration acceptance message to the tag. In a possible implementation, the AMF sends an access success message to the tag.

In this application, the core network device sends mask information with a large range or information about a selected terminal, so that in a process of performing tag random access, the base station does not miss execution of an access procedure of some terminals due to an excessively small range of terminals. By filtering or screening information reported by a terminal, accurate terminal information can be sent to the service requester.

### Implementation 2.2: Construct mask information via a RAN

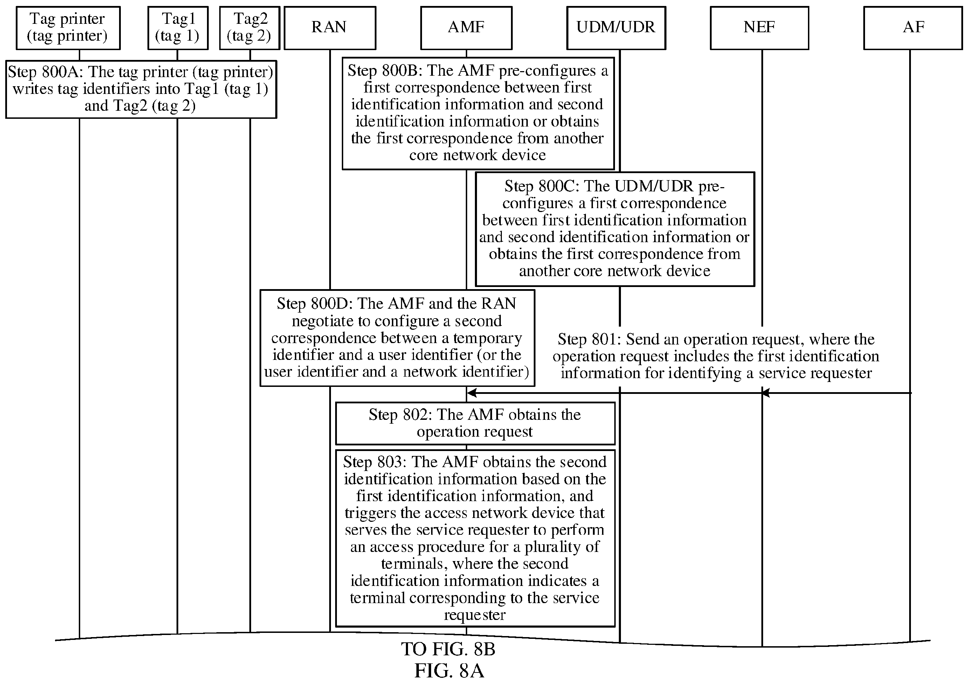

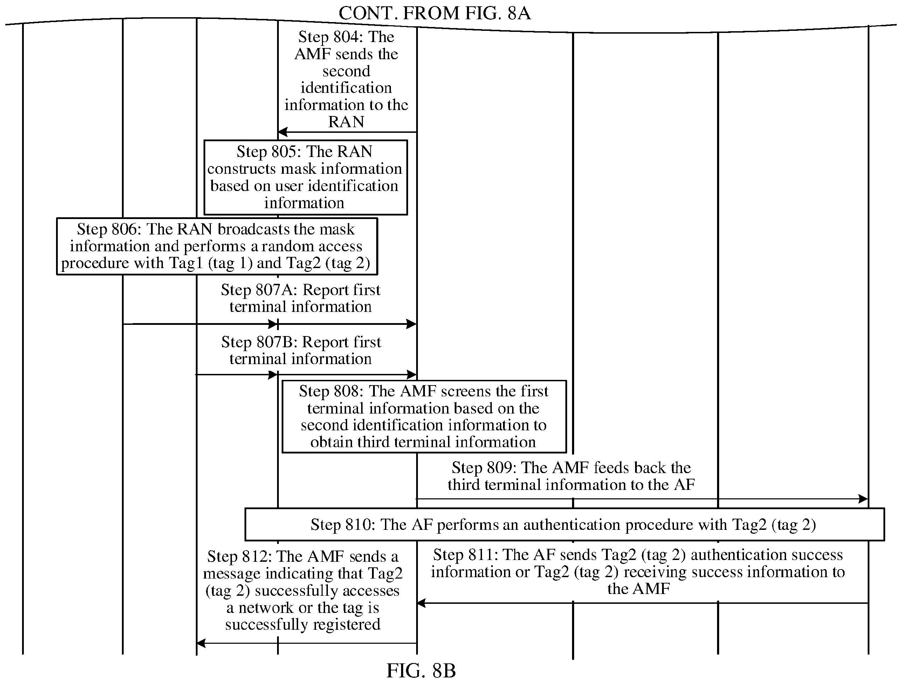

The foregoing example of FIG. 7A and FIG. 7B can be understood as follows that the core network device explicitly indicates information for selecting a tag. In FIG. 8A and FIG. 8B, a core network device does not explicitly indicates the information for selecting a terminal, and an access network device may obtain, generate, or determine the information for selecting the terminal. In FIG. 8A and FIG. 8B, tags being Tag1 and Tag2 (only two tags are used as an example for description herein, but a quantity of tags is not limited in actual application), the access network device being a RAN, the first core network device being an AMF, the second core network device being a UDM/UDR, the service requester being an AF, a tag printer (Tag Printer), and an NEF are used as an example for description. Certainly, in actual application, there may be a plurality of service requesters, and there may also be a plurality of core network devices (for example, enterprise A is distributed in different areas, a core network device that serves a terminal in area 1 of enterprise A is AMF1, and a core network device that serves a terminal in area 2 of enterprise A is AMF2) that serve a specific service requester and a plurality of access network devices. Details are as follows:
Step 801: The AF sends an operation request to the AMF via the NEF, where the operation request includes first identification information for identifying the service requester.

This step may be understood with reference to step 501, and details are not described herein again.

Step 802: The AMF obtains the operation request of the service requester.

This step may be understood with reference to step 502, and details are not described herein again.

Step 803: The AMF obtains second identification information based on the first identification information, and triggers the access network device that serves the service requester to perform an access procedure for a plurality of terminals, where the second identification information indicates a terminal corresponding to the service requester.

This step may be understood with reference to step 703, and details are not described herein again.

To ensure smooth execution of step 803, before step 801 is performed, step 800A, step 800B, step 800C, and step 800D are further performed. Details are specifically as follows:
Step 800A: The tag printer writes tag identifiers into Tag1 and Tag2.

This step may be understood with reference to step 700A, and details are not described herein again.

Step 800B: The AMF pre-configures a first correspondence between the first identification information and the second identification information or obtains the first correspondence from another core network device. This step may be understood with reference to step 700B, and details are not described herein again.

Step 800C: The UDM/UDR pre-configures a first correspondence between the first identification information and the second identification information or obtains the first correspondence from another core network device. This step may be understood with reference to step 700C, and details are not described herein again.

Step 800D: The AMF and the RAN negotiate to configure a second correspondence between a temporary identifier and the user identifier (or a user identifier and a network identifier, or mask information). This step may be understood with reference to step 700D, and details are not described herein again.

Step 804: The AMF sends the second identification information to the RAN to trigger the RAN to perform the access procedure of the terminal to the access network device.

This step may be understood with reference to step 504, and details are not described herein again.

Step 805: The RAN constructs mask information based on the user identifier.

Step 806: The RAN broadcasts the mask information, and performs a random access procedure with Tag1 and Tag2.

Step 807A: Tag1 reports first terminal information to the AMF.

Step 807B: Tag2 reports first terminal information to the AMF.

This step may be understood with reference to step 506A and step 506B, and details are not described herein again.

Step 808: The AMF screens the first terminal information based on the second identification information to obtain third terminal information.

Step 809: The AMF reports the third terminal information to the AF, where the third terminal information is terminal information that is obtained by the AMF by screening the first terminal information and that needs to be reported to the AF.

For example, if the AMF determines, based on the second identification information, that Tag1 is not a subscribed terminal of the service requester, an identifier of Tag1 is not reported; and if the AMF determines, based on the second identification information, that Tag2 is a subscribed terminal of the service requester, an identifier of Tag2 is reported.

In addition, the second identification information may also be referred to as screening information. This is not specifically limited in this application. In addition, the second identification information does not always remain unchanged, but can dynamically change, for example, is determined or directly obtained based on a request message sent by the AF.

In addition, if the third terminal information includes an EPC, the AMF obtains a target EPC code from the third terminal information and sends the target EPC code to the AF. Alternatively, the AMF obtains fourth terminal information based on the third terminal information. The fourth terminal information includes one or more of the following information:
an SUCI, an SUPI, a 5G-GUTI, a TMSI, a 5G-S-TMSI, a GPSI, an EPC, a network identifier, and identification information indicating the service requester. The fourth terminal information may be understood with reference to descriptions of the second terminal information in step 507 in FIG. 5A and FIG. 5B, and details are not described herein again.

Step 810: The AF performs an authentication procedure with Tag2, where an authentication message between the AF and Tag2 may be transmitted via the RAN or the AMF.

Step 811: The AF sends Tag2 authentication success information or Tag2 receiving success information to the AMF.

Optionally, the AF may send the information to the AMF via the NEF (or the SMF or the UPF).

Step 812: The AMF sends a message indicating that Tag2 successfully accesses a network or the tag is successfully registered.

Optionally, the AF may send the information to the AMF via the NEF (or the SMF or the UPF).

In a possible implementation, the AMF sends a registration acceptance message to the tag. In a possible implementation, the AMF sends an access success message to the tag.

Compared with the embodiment in FIG. 7A and FIG. 7B, the core network device does not need to indicate information about tag selection to the base station each time performing a tag operation initiated by a same service requester, so that network resource overheads can be reduced.

### Implementation 3

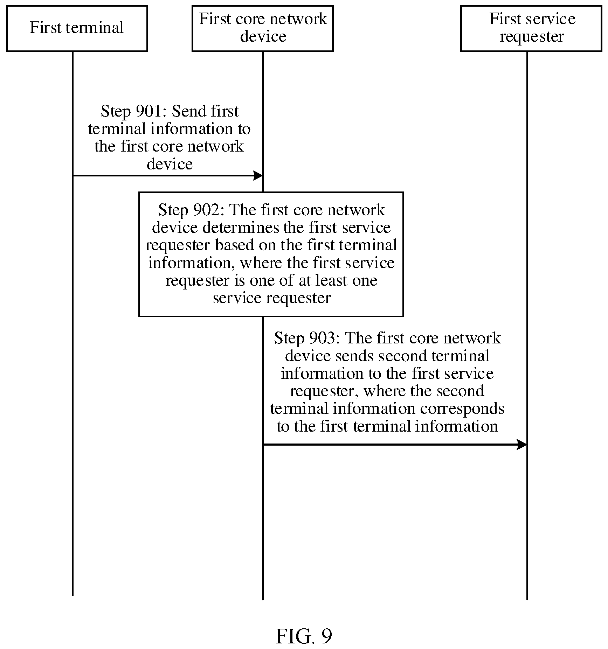

The foregoing implementation 1 and implementation 2 are operations of reporting and inventory of terminal information performed based on triggering of the service requester. Certainly, in actual application, a terminal may actively report terminal information to a core network device without triggering of a service requester. FIG. 9 is used as an example for description. FIG. 9 is described by using a first terminal, a first core network device, and a first service requester as an example. There may be a plurality of first terminals, and only one first terminal is used as an example herein. Detailed execution is as follows:
Step 901: The first terminal sends first terminal information to the first core network device.

For example, the first terminal is an active device, and the first terminal information may be referred to as device information or a device ID. This is not specifically limited in this application.

Step 902: The first core network device determines the first service requester based on the first terminal information, where the first service requester is one of at least one service requester.

In an optional embodiment, if the first terminal information includes identification information indicating the first service requester, the first core network device determines the first service requester based on the identification information indicating the first service requester. In an optional implementation, the identification information indicating the first service requester may be a service requester identifier, a user identifier (User ID), an enterprise identifier (enterprise ID), a third-party identifier (the third party ID), or an owner identifier (owner ID). The service requester identifier, the user identifier, the enterprise identifier, the third-party identifier, or the owner identifier is an implementation of the identification information indicating the first service requester. In actual application, another identifier may be used to indicate an identifier of the first service requester. Herein, the service requester identifier, the user identifier, the enterprise identifier, the third-party identifier, or the owner identifier is merely used as an example for description. In addition, in this application, the service requester identifier, the user identifier, the enterprise identifier, the third-party identifier, or the owner identifier mentioned in the implementation 3 herein may be understood as the identification information indicating the first service requester. Details are not provided below. For example, the first terminal information may be <owner ID><device serial number>. The first core network device determines the first service requester based on <owner ID> in the first terminal information. The owner ID may be replaced by a user ID, an enterprise ID, a third-party ID, an AF ID, or the like. This application does not limit a specific name, construction, and a length of the identification information indicating the first service requester. Any information that may indicate the first service requester may be used as the identification information indicating the first service requester in this application.

In an optional embodiment, the first terminal information includes a first terminal identifier, and there is a correspondence between the first terminal identifier and the identification information (or the first service requester) of the first service requester. The first core network device determines the first service requester based on the first terminal identifier and the correspondence. For example, the first terminal identifier is device ID1, and the core network device obtains a correspondence between a terminal identifier and identification information of a service requester. For example, terminal identifiers of terminals corresponding to AF1 include device ID1 and device ID2. The core network device determines, based on the correspondence information, that a service requester corresponding to device ID1 is the first service requester (AF1). Based on this, it may be known that the first service requester corresponding to the first terminal is AF 1. The identification information of the first service requester may include at least one of the following information: an identifier of the first service requester, an application function identifier corresponding to the first service requester, address information corresponding to the first service requester, and port information corresponding to the first service requester.

In an optional embodiment, the first core network device obtains subscription data based on the first terminal information; and the first core network device determines the first service requester based on the subscription data. For example, the subscription data shows a service requester to which the first terminal belongs, and the first core network device may determine, based on the subscription data, the first service requester corresponding to the first terminal. In addition, the subscription data includes the first terminal information and specifically includes an information item. The first core network device may further determine second terminal information based on the subscription data. For example, if the subscription data shows that the first terminal information includes an EPC, the first core network device may use the EPC in the first terminal information as the second terminal information. This is merely an example for description herein.

In an optional implementation, the first core network device further receives a subscription request from the first service requester, where the subscription request indicates to obtain terminal information of a terminal corresponding to the first service requester. The first core network device sends the second terminal information to the first service requester based on the subscription request when determining that the first terminal information is the terminal information of the terminal corresponding to the first service requester.

Step 903: The first core network device sends the second terminal information to the first service requester, where the second terminal information corresponds to the first terminal information.

Specifically, the second terminal information may be the same as the first terminal information, or the second terminal information may be extracted from the first terminal information. This is not specifically limited herein. The second terminal information may include one or more of the following information: an SUCI, an SUPI, a 5G-GUTI, a TMSI, a 5G-S-TMSI, a GPSI, an EPC, the identification information indicating the first service requester, and a network identifier. This is not specifically limited in this application.

In addition, the identification information indicating the first service requester may be the identification information of the first service requester. For example, the first terminal information includes AF1. The identification information of the first service requester may be indicated by AF1, and the first service requester may be determined directly based on AF1 in the first terminal information. Alternatively, the identification information may be indication information configured by the first terminal according to a preset rule, where the indication information is different from the identification information of the first service requester, but the first service requester may be determined based on the indication information. For example, the first terminal information includes S1, where S1 indicates the first service requester AF1, but the identification information of the first service requester is not indicated by S1. In this case, in actual application, a correspondence between S1 and the first service requester may be determined first, and then the first service requester is determined based on S1 and the correspondence.

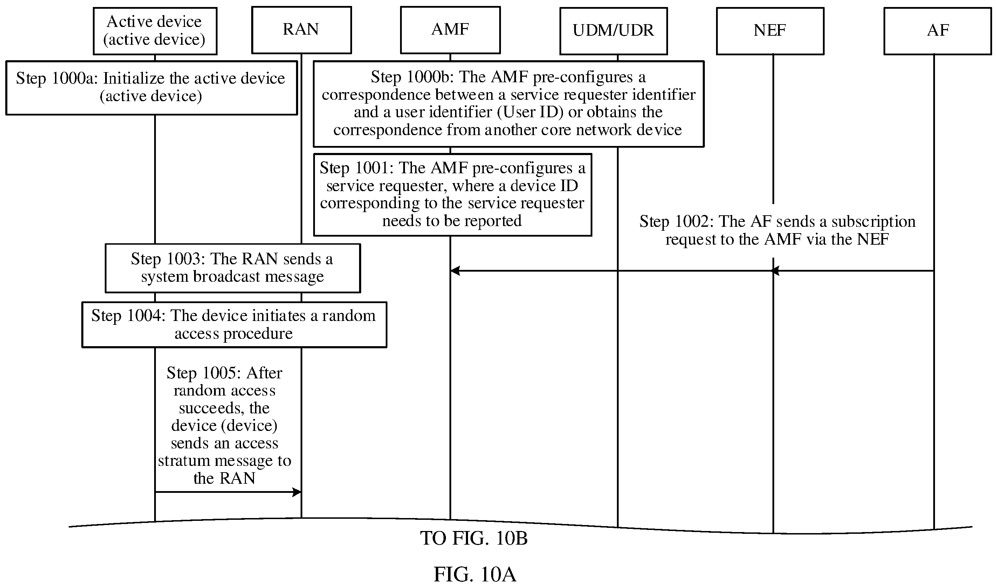

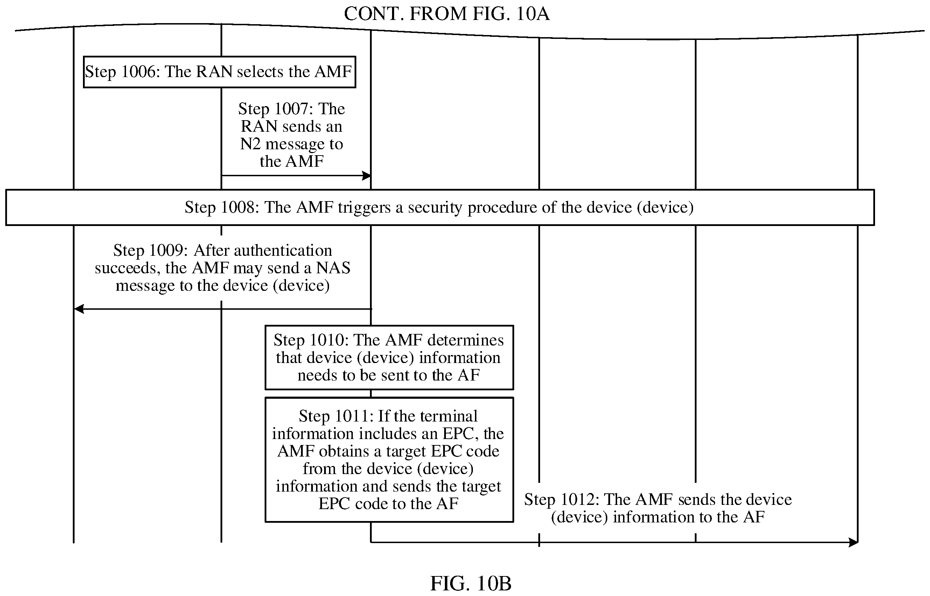

To describe the solutions of this application more clearly, interaction among an access network device (or a reader/writer), a core network device, and a service requester may be used for description. The access network device may be a RAN, a TRP, a gNB, a pole station, a micro base station, an indoor pole station, an IAB node, or the like. The core network device may include an AMF, a TMF, an NEF, a PCF, an NSSAAF, an AUSF, an SMF, a UDM, or a UDR, and is configured to perform an internet of things terminal management function, and configured to perform an internet of things service management function. The service requester may be an AF, an AS, or the like, and the reader/writer may be an access network device or a terminal device. This is not specifically limited in this application. Next, descriptions are provided based on interaction between a terminal (which may be understood as the foregoing tag), the access network device, a first core network device, a second core network device, and the service requester. In FIG. 10A and FIG. 10B, the terminal being an active device (an example is merely used for description herein, but device forms of terminals and a quantity of terminals are not limited in actual application), the access network device (or the reader/writer) being a RAN, the first core network device being an AMF, the second core network device being a UDM/UDR, first service requester being an AF, and an NEF are used as an example for description. Certainly, in actual application, there may be a plurality of service requesters, and there may also be a plurality of core network devices (for example, enterprise A is distributed in different areas, a core network device that serves a terminal in area 1 of enterprise A is AMF1, and a core network device that serves a terminal in area 2 of enterprise A is AMF2) that serve a specific service requester and a plurality of access network devices. Details are as follows:
Step 1000a: Initialize the active device, and write device information (namely, the first terminal information in FIG. 9, which may also be referred to as a device ID).

During initialization, the device information may be written into a device according to a rule or a negotiated rule. Optionally, a security parameter may be further written. The device information may include a network identifier (for example, a PLMN ID and/or an NID), a user identifier (for example, a User ID), and information indicating a first terminal. The information indicating the first terminal may be assigned by an operator, may be constructed based on an EPC, or may be assigned by a third party (for example, assigned by a non-operator or negotiated by an operator and a third party). In a possible implementation, the information indicating the first terminal may be assigned by an enterprise, a user, an AF, a device owner, a device manager, and a service requester. For example, when the information (for example, an EPC or identification information assigned by a third party) indicating the first terminal is written into the device, one or more of a network identifier (for example, a PLMN ID and/or an NID) and a user identifier (for example, a User ID) are further written, so that the written device information includes one or more of the PLMN ID, the NID, the user identifier, and the information indicating the first terminal.

In a possible implementation, the identification information assigned by the third party may be for identifying one or more terminals managed by the service requester. In other words, the identification information may uniquely identify a terminal in the one or more terminals managed by the service requester, but is not required to be globally unique (for example, in a plurality of service requesters or in a plurality of operator networks). In a possible implementation, the EPC may be replaced with another identifier (for example, a sequence number or an index number). To be specific, the field may be for identifying one or more terminals managed by the service requester, or the field may uniquely identify a terminal managed by the service requester. It can be understood that the field may alternatively be globally unique. This application is not limited. Alternatively, the user identifier may indicate the service requester. The user identifier may be constructed based on an actual requirement and has a correspondence with the service requester, or may be the identifier of the service requester, such as an AF ID, an AF identifier, an AF identity, an APP identifier, an APP identity, a service identifier, or a service identity. For example, the user identifier may be replaced with an owner identifier (for example, owner ID) to indicate an owner of the device. In one possible implementation, there is a correspondence between an owner and a service requester. A specific form of the user identifier is not specifically limited in this application. Certainly, in this embodiment of this application, an example in which the user identifier indicates the identifier corresponding to the service requester is used. In actual application, the user identifier may also be referred to as an identity, an application identifier, an owner identifier, a manager identifier, or the like. This is not specifically limited in this application. In actual application, the first terminal information (namely, the device information or the device ID) may include information (which may be assigned by an operator, a service requester, or a terminal owner) indicating the first terminal, an SUCI, an SUPI, a 5G-GUTI, a TMSI, a 5G-S-TMSI, a GPSI, an EPC, identification information assigned by the service requester, identification information indicating the service requester, and the like. This is not specifically limited in this application. In this application, the third party, the user, the service requester, the enterprise, the device owner, the device manager, and AF can be substituted for each other unless otherwise specified.

If the device ID is a new type of terminal identifier, the service requester may write a corresponding device ID into a device based on a device ID negotiated with the operator, or based on a device ID obtained from an operator (for example, a business & operation support system (business & operation support system, BOSS) system).

In addition, it should be further noted that, after step 1000a is performed, the core network device (for example, the AMF) may report information to a service requester corresponding to the active device after the active device accesses a network, or may not perform any processing operation first, and then report the device ID after obtaining a subscription request (for example, a subscription request indicating to obtain the device ID) of the service requester corresponding to the active device. This is merely an example limitation, and does not specifically limit data processing logic of the core network device (for example, the AMF).

Step 1000b: The AMF pre-configures a correspondence between a service requester identifier and a user identifier (User ID) or obtains the correspondence from another core network device.

The user identifier may be understood with reference to step 500A, and details are not described herein again. Step 1000b is performed, so that the AMF can learn device IDs and service requesters that are associated with each other. In this way, the AMF determines service requesters whose device IDs are selected for reporting or performs other service processing.

Optionally, if the user identifier is the identifier of the service requester, the AMF may determine the service requester based on the user identifier. In this case, the AMF may determine the service requester without obtaining the pre-configured correspondence between the service requester identifier and the user identifier (User ID) or obtaining the correspondence between the service requester identifier and the user identifier (User ID) from another core network device.

Step 1001: The AMF pre-configures information indicating one or more service requesters to indicate that the AMF needs to send, to the one or more service requesters, a device ID of a device corresponding to the one or more service requesters. For example, after determining that the terminal (device) corresponding to the one or more service requesters accesses a network, the AMF may send the device ID to the one or more service requesters based on the pre-configured information indicating the one or more service requesters. In a possible implementation, that the terminal (device) accesses a network may be understood as that the terminal registers with the network, establishes a connection to the network, or establishes an initial connection to the network.

The service requester in step 1001 is a first service requester, and the first service requester may be indicated by identification information of the first service requester. Specifically, the identification information of the first service requester may include at least one of the following information: an identifier of the first service requester, an application function identifier corresponding to the first service requester, address information corresponding to the first service requester, and port information corresponding to the first service requester. In a possible implementation, the AMF may configure the information about the one or more service requesters, to obtain terminal information (namely, device information) of the one or more service requesters. In a possible implementation, the service requester identifier pre-configured in step 1001 may be an identifier of a service requester to which the device ID needs to be reported. In another possible implementation, the AMF may configure information about the service requester, and time and a location at which the terminal information needs to be reported to the service requester. The time may indicate a start time point, an end time point, duration, and a period (for example, every x hours) at or within which the terminal information needs to be reported. The location may indicate a location at which the terminal information needs to be reported. For example, for a terminal accessing the network at a specific location, terminal information needs to be reported to a corresponding third party. The location may include one or more of latitude and longitude, coordinate values, a cell identifier, a tracking area identifier, a closed access group identifier (closed access group ID, CAG ID) (to be specific, a cell supporting broadcasting the CAG ID), a group identifier for network selection (group identifier for network selection, GIN) (to be specific, a cell supporting broadcasting the GIN), and the like.

Step 1002: The AF sends the subscription request to the AMF via the NEF, where the subscription request is for obtaining terminal information of the terminal corresponding to the AF.

The subscription request includes one or more of the following:
The corresponding active device sends second terminal information to the AF after registering with a network (to be specific, accessing the network or establishing a connection to the network), the active device corresponding to the AF sends second terminal information to the AF after registering with a network within specified time, or the active device corresponding to the AF sends second terminal information to the AF after registering with a network in a specified area. If the device ID is constructed based on the EPC or assigned by a third party, information obtained by extracting the EPC in the device ID or a part assigned by the third party may be understood as the second terminal information. This is merely an example for description herein. Alternatively, the second terminal information may be obtained by removing another identifier from the device ID or extracting a part of fields. This is not specifically limited in this application.

After obtaining the device ID of the active device corresponding to the AF based on the subscription request, the AMF sends the device ID of the device corresponding to the AF to the AF. That is, the AF subscribes to a core network, so that after the device corresponding to the AF accesses the core network, the AF may learn, by using the core network, which terminals access the network, to subsequently perform a service operation on the terminals. In a possible implementation, after a terminal (for example, an active device) of a specific terminal type completes the registration, the core network sends terminal information to a third party corresponding to the terminal. For example, the core network may consider that after a terminal (for example, an active device) of a specific terminal type is registered, device ID information is sent to a corresponding third party.

Step 1003: The RAN sends a broadcast message (for example, a system information broadcast (system information broadcast, SIB)), where the broadcast message includes network identification information,
for example, a PLMN ID or a PLMN ID and an NID (a network identifier in a standalone non-public network scenario), so that a device receiving a service under the PLMN ID performs a random access operation.

Step 1004: The active device initiates a random access procedure.

For example, in the random access procedure, the active device may establish an RRC connection to the RAN.

Step 1005: After succeeding in random access, the active device sends an access stratum message (for example, an RRC message) to the RAN.

The RRC message may include device information such as identification information of the active device. For example, the RRC message includes a NAS message sent by the active device to the core network (for example, the AMF), where the NAS message includes the identification information (for example, a device ID) of the active device. Optionally, the RRC message may further include terminal type information. The terminal type information may indicate that the terminal is an internet of things terminal (for example, an ambient IoT terminal) or an active device/passive device. The NAS message may be a NAS request message, a NAS registration request message, a NAS access request message, or the like. In another possible implementation, the active device sends a request message to the core network, where the request message includes identification information (for example, a device ID) of the active device. The request message may be a registration request message, an access request message, or the like. The message sent by the active device may be used by the active device to access the core network or perform a registration procedure. In a possible implementation, the device ID sent by the active device may be constructed based on an EPC (or assigned by a third party) or a new identifier (for example, assigned by an operator). When the device ID is constructed based on the EPC, the device ID may be: <PLMN ID> <NID> <user identifier> <SUPI type> <assignment mode> <category> <EPC>. The PLMN ID, the NID, and the user identifier are described above. A value or a character string corresponding to the SUPI type may indicate that the identifier corresponds to an internet of things terminal (for example, a passive internet of things terminal or an ambient energy obtaining terminal) or that the identifier is based on the EPC. The assignment mode may indicate whether the EPC code or the identifier assigned by the third party is globally unique or non-globally unique, for example, whether the EPC code corresponds to a globally unique EPC or a customized EPC code. For example, when the assignment mode indicates a coordinated assignment mode (when the coordinated assignment mode is required), the EPC code or the identifier assigned by the third party is globally unique, or a combination of the EPC code/the identifier, namely, the PLMN ID, assigned by the third party and/or the NID is globally unique. When the assignment mode indicates self-assignment (a self-assignment mode), the EPC code or the identifier assigned by the third party may not be globally unique. A representation form of the assignment mode is not limited in this application, and may be a form of a bit (0 or 1), a character string, a number, or the like. The category may indicate a type corresponding to the passive internet of things terminal, for example, indicate that the internet of things terminal is various types of terminals such as a passive terminal, a semi-passive terminal, a passive terminal with energy storage, a semi-passive terminal with energy storage, an active terminal, an ambient energy obtaining terminal, or the like. A representation form of the category may be a number, a bit, a character string, or the like. This is not limited in this application. In this application, the EPC, the identifier assigned by the third party, the application identifier, an identifier negotiated by the third party and the operator, and the like may be replaced with each other.

Step 1006: The RAN selects an AMF. In a possible implementation, the RAN may select the AMF based on an access technology type. For example, the RAN learns that the access type is an ambient IoT access type or a passive IoT access type, and selects an AMF that supports ambient IoT (or passive IoT).

Step 1007: The RAN sends an N2 message to the AMF, where the message includes the NAS message from the active device.

In a possible implementation, the RAN may add indication information to the N2 message, to indicate that the terminal is a terminal of a specific type, or the indication information may indicate an ambient IoT, indicate that the terminal is an ambient IoT terminal, indicate that the access technology type is ambient IoT, indicate that the terminal uses an ambient IoT access technology for access, or indicate that an ambient IoT service/service.

Step 1008: The AMF triggers a security procedure (for example, an authentication procedure) of the active device.

Devices participating in the authentication procedure may include an AUSF, a UDM, an AMF, an active device, and the like.

Step 1009: After the authentication succeeds, the AMF may send the NAS message (which, for example, may be a registration accept message or an access success message) to the active device.

Step 1010: The AMF determines that the device information needs to be sent to the AF.

When step 1010 is performed, the AMF may determine an AF based on the device information, where the AF is one of at least one service requester. In actual application, the device information corresponds to one service requester. Therefore, the AMF may select the AF based on the device information. Specifically, for example, AF1 configures device ID1 for the active device. When receiving device ID1, the AMF may determine that the service requester corresponding to device ID1 is AF1.

In a possible implementation, when determining that the active device is an ambient IoT device, the AMF needs to send active device information to the AF. There may be the following three manners used by the AMF to determine that the active device as an ambient IoT device:
(1) The AMF determines, based on an active device type in the NAS message sent by the active device, that the device is an ambient IoT device.
(2) The AMF determines, based on ambient IoT indication information or access technology type information included in the N2 message sent by the RAN, that the device is an ambient IoT device.
(3) The AMF determines, based on the device ID, that the device is an ambient IoT device. For example, if the device ID is a device in a specific format, the AMF may determine that the device is an ambient IoT device based on a format; or if the device ID includes terminal type information (for example, the foregoing <category> field), the AMF may determine that the device is an ambient IoT device.

In another possible implementation, the AMF learns, based on step 1001 or step 1002, that after a specific device accesses the network or after a device corresponding to a specific AF accesses the network, the AMF needs to send device information to the AF. A manner in which the AMF learns that the device is a specific device may be that the device ID matches a specific device ID obtained by the AMF. Alternatively, when the device ID matches a specific AF obtained by the AMF, the AMF learns that the device information needs to be sent to the AF. For example, when a user identifier included in the device ID matches a specific AF obtained by the AMF, the AMF learns that the device information needs to be sent to the AF.

The AMF may determine the AF based on the device ID. In a possible implementation, the device information includes first identification information indicating the first service requester. For example, the device ID includes identification information of the AF. In another implementation, the device information includes the device ID, and there is a correspondence between the device ID and identification information of the first service requester. The AMF may determine the identification information of the first service requester based on the device ID and the correspondence, and the AMF obtains the correspondence between the user identifier (which may also be referred to as an owner ID) in the device ID and an AF (namely, the service requester described in step 1001) identifier. The AMF determines the AF based on the user identifier in the device ID and the correspondence. In addition, the AMF may further obtain subscription data based on the device information, and determine the first service requester (namely, the AF) based on the subscription data. In addition, the AMF may further determine the second terminal information based on the subscription data, for example, determine, based on the subscription data, that the device ID is constructed based on the EPC. In this case, during actual execution, the EPC in the device ID may be extracted as the second terminal information.

Step 1011: Optionally, if the device ID includes the EPC or the ID assigned by the third party, the AMF obtains, from the device ID, a target EPC code or the ID part assigned by the third party, and sends, to the AF, the target EPC code or the ID part assigned by the third party.

In a possible implementation, if the device ID includes the EPC, or includes the ID assigned by the third party or an application identifier (namely, an ID not assigned by an operator), the AMF may further extract the EPC (or extract the ID part assigned by the third party). In another possible implementation, the AMF obtains (for example, obtained via a UDM or a UDR subscription data or context information) corresponding to the device ID. When the subscription data or the context information includes a GPSI, an EPC, an application identifier, or an ID assigned by a third party, the AMF sends, to the AF through step 912, the GPSI, the EPC, the application identifier, or the ID assigned by the third party that corresponds to the device. The ID assigned by a third party may be considered as an ID written by the third party during device initialization or an ID pre-configured for the device ID.

Step 1012: The AMF sends the device information to the AF.

In a possible implementation, the device information in step 1012, that is, the second terminal information, may be the device ID of the device and/or the GPSI, the EPC, or the application identifier obtained by the AMF based on the device ID, or may be the ID assigned by the third party. For a manner of obtaining the EPC/the ID assigned by third party, refer to step 1011. The AMF may send the second terminal information to the AF via the NEF (or the SMF or the UPF).

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

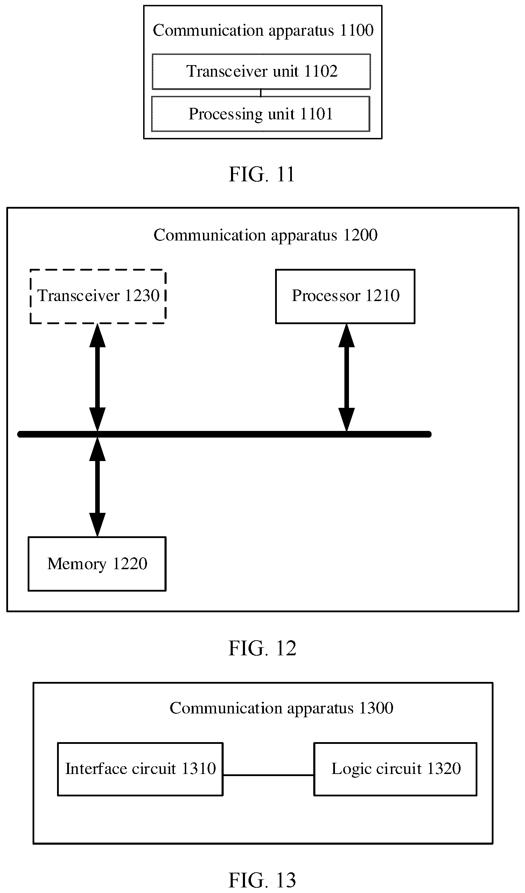

When an integrated unit is used, FIG. 11 is a possible example block diagram of a communication apparatus according to an embodiment of this application. As shown in FIG. 11, the communication apparatus 1100 may include a processing unit 1101 and a transceiver unit 1102. The processing unit 1101 is configured to control and manage an action of the communication apparatus 1100. The transceiver unit 1102 is configured to support communication between the communication apparatus 1100 and another device. Optionally, the transceiver unit 1102 may include a receiving unit and/or a sending unit, which are respectively configured to perform a receiving operation and a sending operation. Optionally, the communication apparatus 1100 may further include a storage unit, configured to store program code and/or data of the communication apparatus 1100. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the foregoing access network device, the first core network device, or the like.

In an embodiment, the transceiver unit 1102 is configured to receive an operation request of a service requester, where the operation request includes first identification information for identifying the service requester. The processing unit 1101 is configured to obtain second identification information based on the first identification information, where the second identification information indicates a terminal that the service requester requests to operate. The transceiver unit 1102 is further configured to send the second identification information to an access network device serving the terminal, and trigger the access network device to perform an access procedure of the terminal.

In an optional implementation, the first identification information includes at least one of the following information:
an identifier of the service requester, an application function identifier corresponding to the service requester, address information corresponding to the service requester, and port information corresponding to the service requester.

In an optional implementation, the second identification information includes: mask information, where the mask information includes a user identifier; or the mask information includes a network identifier and the user identifier, where there is a correspondence between the user identifier and the service requester.

In an optional implementation, the transceiver unit 1102 is further configured to send access indication information to the access network device serving the terminal, where the access indication information is for triggering the access network device to perform the access procedure of the terminal.

In an optional implementation, the access indication information indicates one or more of the following information: the access network device starting to perform the access procedure; the access network device performing a first-mode access procedure; or the access network device performing a second-mode access procedure.

In an optional implementation, there is a first correspondence between the second identification information and the first identification information. The processing unit 1101 is configured to obtain the second identification information based on the first correspondence and the first identification information.

In an optional implementation, the first core network device pre-configures the first correspondence, the first core network device generates the first correspondence, or the first core network device obtains the first correspondence from a second core network device.

In an optional implementation, the transceiver unit 1102 is configured to receive first terminal information reported by one or more terminals in a plurality of terminals that the service requester requests to operate. If the first terminal information includes an electronic product code EPC, the processing unit 1101 is configured to obtain a target EPC code from the first terminal information and send the target EPC code to the service requester; or obtain second terminal information based on the first terminal information.

In an optional implementation, the second terminal information includes one or more of the following information:
an SUCI, an SUPI, a 5G-GUTI, a TMSI, a 5G-S-TMSI, a GPSI, an EPC, a network identifier, and identification information indicating the service requester.

In another embodiment, the transceiver unit 1102 is configured to receive an operation request of a service requester, where the operation request includes first identification information for identifying the service requester. The processing unit 1101 is configured to: obtain second identification information based on the first identification information, and trigger an access network device that serves the service requester to perform an access procedure for a plurality of terminals, where the second identification information indicates a terminal corresponding to the service requester. The transceiver unit 1102 is further configured to receive first terminal information reported by one or more first terminals in the plurality of terminals. The processing unit 1101 is further configured to send third terminal information to the service requester based on the second identification information, where the third terminal information is terminal information that is obtained by the first core network device by screening the first terminal information and that needs to be reported to the service requester.

In an optional implementation, the first identification information includes at least one of the following information:
an identifier of the service requester, an application function identifier corresponding to the service requester, address information corresponding to the service requester, and port information corresponding to the service requester.

In an optional implementation, the second identification information includes the following information:
a user identifier;
an event identifier or a transaction identifier; and/or
an NGAP identifier, where
there is a correspondence between the second identification information and the service requester.

In an optional implementation, the transceiver unit 1102 is further configured to send access indication information to the access network device serving the terminal, where the access indication information is for triggering the access network device to perform an access procedure of the terminal.

In an optional implementation, the access indication information indicates one or more of the following information:
the access network device starting to perform the access procedure;
the access network device performing a first-mode access procedure; or
the access network device performing a second-mode access procedure.

In an optional implementation, there is a first correspondence between the second identification information and the first identification information. The processing unit 1101 is configured to obtain the second identification information based on the first correspondence and the first identification information.

In an optional implementation, the first core network device pre-configures the first correspondence, the first core network device generates the first correspondence, or the first core network device obtains the first correspondence from a second core network device.

In an optional implementation, if the third terminal information includes an EPC, the processing unit 1101 is configured to: obtain a target EPC code from the third terminal information and send the target EPC code to the service requester; or obtain fourth terminal information based on the third terminal information.

In an optional implementation, the fourth terminal information includes one or more of the following information:
an SUCI, an SUPI, a 5G-GUTI, a TMSI, a 5G-S-TMSI, a GPSI, an EPC, a network identifier, and identification information indicating the service requester.

In still another embodiment, the transceiver unit 1102 is configured to receive second identification information, where the second identification information indicates a terminal that a service requester requests to operate. The processing unit 1101 is configured to perform an access procedure of the terminal based on the second identification information.

In an optional implementation, the second identification information includes:
a user identifier; or a network identifier and the user identifier, where there is a correspondence between the user identifier and the service requester.

In an optional implementation, the processing unit 1101 is configured to construct mask information based on the second identification information. The transceiver unit 1102 is configured to send the mask information to trigger the access procedure of the terminal.

In an optional implementation, the transceiver unit 1102 is further configured to receive access indication information, where the access indication information is for triggering the access network device to perform the access procedure of the terminal.

In an optional implementation, the access indication information indicates one or more of the following information:
the access network device starting to perform the access procedure;
the access network device performing a first-mode access procedure; or
the access network device performing a second-mode access procedure.

In yet another embodiment, the transceiver unit 1102 is configured to receive second identification information, where the second identification information indicates a terminal corresponding to a service requester. The processing unit 1101 is configured to perform an access procedure of a plurality of terminals based on the second identification information.

In an optional implementation, the second identification information includes the following information:
a user identifier;
an event identifier or a transaction identifier; and/or
an NGAP identifier, where
there is a correspondence between the second identification information and the service requester.

In an optional implementation, the processing unit 1101 is configured to construct mask information based on the second identification information. The transceiver unit 1102 is configured to send the mask information to trigger the access procedure of the terminal.

In an optional implementation, the transceiver unit 1102 is further configured to receive access indication information, where the access indication information is for triggering the access network device to perform an access procedure of the terminal.

In an optional implementation, the access indication information indicates one or more of the following information:
the access network device starting to perform the access procedure;
the access network device performing a first-mode access procedure; or
the access network device performing a second-mode access procedure.

In yet another embodiment, a transceiver unit 1102 is configured to receive first terminal information. The processing unit 1101 is configured to determine a first service requester based on the first terminal information, where the first service requester is one of at least one service requester. The transceiver unit 1102 is further configured to send second terminal information to the first service requester, where the second terminal information corresponds to the first terminal information.

In an optional implementation, if the first terminal information includes identification information indicating the first service requester, the processing unit 1101 is configured to determine the first service requester based on the identification information indicating the first service requester.

In an optional implementation, the first terminal information includes a first terminal identifier, and there is a correspondence between the first terminal identifier and the identification information indicating the first service requester. The processing unit 1101 is configured to determine the first service requester based on the first terminal identifier and the correspondence.

In an optional implementation, the processing unit 1101 is further configured to obtain subscription data based on the first terminal information; and determine the first service requester based on the subscription data.

In an optional implementation, the processing unit 1101 is further configured to: obtain subscription data based on the first terminal information; and determine the second terminal information based on the subscription data.

In an optional implementation, the identification information indicating the first service requester includes at least one of the following information: an identifier of the first service requester, an application function identifier corresponding to the first service requester, address information corresponding to the first service requester, and port information corresponding to the first service requester.

In an optional implementation, the transceiver unit 1102 is further configured to: receive a subscription request from the first service requester, where the subscription request indicates to obtain terminal information of a terminal corresponding to the first service requester; and send the second terminal information to the first service requester based on the subscription request when determining that the first terminal information is the terminal information of the terminal corresponding to the first service requester.

In an optional implementation, the subscription request includes one or more of the following: sending the second terminal information to the first service requester after the terminal corresponding to the first service requester accesses a network; sending the second terminal information to the first service requester after the terminal corresponding to the first service requester accesses a network within specified time; and sending the second terminal information to the first service requester after the terminal corresponding to the first service requester accesses a network in a specified area.

In an optional implementation, the transceiver unit 1102 is further configured to obtain the second terminal information from the first terminal information.

In an optional implementation, the second terminal information includes one or more of the following information:
an SUCI, an SUPI, a 5G-GUTI, a TMSI, a 5G-S-TMSI, a GPSI, an EPC, the identification information indicating the first service requester, and a network identifier.

FIG. 12 shows a communication apparatus 1200 further provided in this application. The communication apparatus 1200 may be a chip or a chip system. The communication apparatus may be located in a device in any one of the foregoing method embodiments, for example, the access network device or the first core network device, to perform an action corresponding to the device.

Optionally, the chip system may include a chip, or may include a chip and another discrete component.

The communication apparatus 1200 includes a processor 1210.

The processor 1210 is configured to execute a computer program stored in a memory 1220, to implement an action of each device in any one of the foregoing method embodiments.

The communication apparatus 1200 may further include the memory 1220, configured to store the computer program.

Optionally, the memory 1220 is coupled to the processor 1210. The coupling is an indirect coupling or a communication connection between apparatuses, units, or modules, may be in an electrical form, a mechanical from, or another form, and is used for information exchange between the apparatuses, the units, or the modules. Optionally, the memory 1220 and the processor 1210 are integrated together.

There may be one or more processors 1210 and one or more memories 1220. This is not limited.

Optionally, in actual application, the communication apparatus 1200 may include or may not include a transceiver 1230. A dashed box is used as an example in the figure. The communication apparatus 1200 may exchange information with another device through the transceiver 1030. The transceiver 1230 may be a circuit, a bus, a transceiver, or any other apparatus that may be configured to exchange information.

In a possible implementation, the communication apparatus 1200 may be the access network device or the first core network device in the foregoing method embodiments.

In this embodiment of this application, a specific connection medium between the transceiver 1230, the processor 1210, and the memory 1220 is not limited. In this embodiment of this application, the memory 1220, the processor 1210, and the transceiver 1230 are connected through a bus in FIG. 12. The bus is represented by using a thick line in FIG. 12. A manner of a connection between other components is merely an example for description, and is not limited thereto. The bus may be classified into an address bus, a data bus, a control bus, and the like. For ease of representation, only one thick line is used to represent the bus in FIG. 12, but this does not mean that there is only one bus or only one type of bus. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 13. An embodiment of this application further provides another communication apparatus 1300, including an interface circuit 1310 and a logic circuit 1320. The interface circuit 1310 may be understood as an input/output interface, and may be configured to perform sending and receiving steps of each device in any one of the foregoing method embodiments. The logic circuit 1320 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments is implemented. For example, the method performed by the RAN or the AMF in the embodiment shown in FIG. 6A and FIG. 6B is implemented. The computer-readable storage medium may include any medium that can store program code, for example, a USB flash drive, a removable hard disk drive, a read-only memory, a random access memory, a magnetic disk, or an optical disc.

Based on the foregoing embodiments, an embodiment of this application provides a communication system. The communication system includes the access network device (for example, the RAN) and the first core network device (for example, the AMF) mentioned in any one of the foregoing method embodiments, and may be configured to perform the method performed by each device in any one of the foregoing method embodiments.

In addition, the communication system may further include a terminal (for example, UE). The terminal may perform data exchange with an access network device and a core network device, to perform a related method in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, comprising:
receiving, by a first core network device, an operation request of a service requester, wherein the operation request comprises first identification information for identifying the service requester;
obtaining, by the first core network device, second identification information based on the first identification information, wherein the second identification information indicates a terminal that the service requester requests to operate; and
sending, by the first core network device, the second identification information to an access network device serving the terminal, and triggering the access network device to perform an access procedure of the terminal.

2. The method according to claim 1, wherein the first identification information comprises at least one of the following information:
an identifier of the service requester, an application function identifier corresponding to the service requester, address information corresponding to the service requester, and port information corresponding to the service requester.

3. The method according to claim 1 or 2, wherein the second identification information comprises:
mask information, wherein the mask information comprises a user identifier; or
the mask information comprises a network identifier and the user identifier, wherein
there is a correspondence between the user identifier and the service requester.

4. The method according to any one of claims 1 to 3, further comprising:
further sending, by the first core network device, access indication information to the access network device serving the terminal, wherein the access indication information is for triggering the access network device to perform the access procedure of the terminal.

5. The method according to claim 4, wherein the access indication information indicates one or more of the following information:
the access network device starting to perform the access procedure;
the access network device performing a first-mode access procedure; or
the access network device performing a second-mode access procedure.

6. The method according to any one of claims 1 to 5, wherein there is a first correspondence between the second identification information and the first identification information, and the obtaining, by the first core network device, second identification information based on the first identification information comprises:
obtaining, by the first core network device, the second identification information based on the first correspondence and the first identification information.

7. The method according to claim 6, wherein the first core network device pre-configures the first correspondence, the first core network device generates the first correspondence, or the first core network device obtains the first correspondence from a second core network device.

8. The method according to any one of claims 1 to 7, wherein the method further comprises:
receiving, by the first core network device, first terminal information reported by one or more terminals in a plurality of terminals that the service requester requests to operate; and
if the first terminal information comprises an electronic product code EPC, obtaining, by the first core network device, a target EPC code from the first terminal information and sending the target EPC code to the service requester; or
obtaining, by the first core network device, second terminal information based on the first terminal information.

9. The method according to claim 8, wherein the second terminal information comprises one or more of the following information:
a subscription concealed identifier SUCI, a subscription permanent identifier SUPI, a 5th-generation globally unique temporary identity 5G-GUTI, a temporary mobile subscriber identity TMSI, a 5G system-temporary mobile subscriber identity 5G-S-TMSI, a generic public subscription identifier GPSI, an EPC, a network identifier, and identification information indicating the service requester.

10. A communication method, comprising:
receiving, by a first core network device, an operation request of a service requester, wherein the operation request comprises first identification information for identifying the service requester;
obtaining, by the first core network device, second identification information based on the first identification information, and triggering an access network device that serves the service requester to perform an access procedure for a plurality of terminals, wherein the second identification information indicates a terminal corresponding to the service requester;
receiving, by the first core network device, first terminal information reported by one or more first terminals in the plurality of terminals; and
sending, by the first core network device, third terminal information to the service requester based on the second identification information, wherein the third terminal information is terminal information that is obtained by the first core network device by screening the first terminal information and that needs to be reported to the service requester.

11. The method according to claim 10, wherein the first identification information comprises at least one of the following information:
an identifier of the service requester, an application function identifier corresponding to the service requester, address information corresponding to the service requester, and port information corresponding to the service requester.

12. The method according to claim 10 or 11, wherein the second identification information comprises the following information:
a user identifier;
an event identifier or a transaction identifier; and/or
a next-generation application protocol NGAP identifier, wherein
there is a correspondence between the second identification information and the service requester.

13. The method according to any one of claims 10 to 12, wherein the first core network device further sends access indication information to the access network device, wherein the access indication information is for triggering the access network device to perform an access procedure of the terminal.

14. The method according to claim 13, wherein the access indication information indicates one or more of the following information:
the access network device starting to perform the access procedure;
the access network device performing a first-mode access procedure; or
the access network device performing a second-mode access procedure.

15. The method according to any one of claims 10 to 14, wherein there is a first correspondence between the second identification information and the first identification information, and the obtaining, by the first core network device, second identification information based on the first identification information comprises:
obtaining, by the first core network device, the second identification information based on the first correspondence and the first identification information.

16. The method according to claim 15, wherein the first core network device pre-configures the first correspondence, the first core network device generates the first correspondence, or the first core network device obtains the first correspondence from a second core network device.

17. The method according to any one of claims 10 to 16, wherein the method further comprises:
if the third terminal information comprises an electronic product code EPC, obtaining, by the first core network device, a target EPC code from the third terminal information and sending the target EPC code to the service requester; or
obtaining, by the first core network device, fourth terminal information based on the third terminal information.

18. The method according to claim 17, wherein the fourth terminal information comprises one or more of the following information:
a subscription concealed identifier SUCI, a subscription permanent identifier SUPI, a 5th-generation globally unique temporary identity 5G-GUTI, a temporary mobile subscriber identity TMSI, a 5G system-temporary mobile subscriber identity 5G-S-TMSI, a generic public subscription identifier GPSI, an EPC, a network identifier, and identification information indicating the service requester.

19. A communication method, comprising:
receiving, by a first core network device, first terminal information;
determining, by the first core network device, a first service requester based on the first terminal information, wherein the first service requester is one of at least one service requester; and
sending, by the first core network device, second terminal information to the first service requester, wherein the second terminal information corresponds to the first terminal information.

20. The method according to claim 19, wherein the first terminal information comprises identification information indicating the first service requester, and the determining, by the first core network device, a first service requester based on the first terminal information comprises:
determining, by the first core network device, the first service requester based on the identification information indicating the first service requester.

21. The method according to claim 19, wherein the first terminal information comprises a first terminal identifier, and there is a correspondence between the first terminal identifier and identification information of the first service requester; and the determining, by the first core network device, a first service requester based on the first terminal information comprises:
determining, by the first core network device, the first service requester based on the first terminal identifier and the correspondence.

22. The method according to claim 19, wherein the determining, by the first core network device, a first service requester based on the first terminal information comprises:
obtaining, by the first core network device, subscription data based on the first terminal information; and
determining, by the first core network device, the first service requester based on the subscription data.

23. The method according to claim 19, wherein the method further comprises:
obtaining, by the first core network device, subscription data based on the first terminal information; and
obtaining, by the first core network device, the second terminal information based on the subscription data.

24. The method according to claim 21, wherein the identification information of the first service requester comprises at least one of the following information:
an identifier of the first service requester, an application function identifier corresponding to the first service requester, address information corresponding to the first service requester, and port information corresponding to the first service requester.

25. The method according to claim 19, further comprising:
receiving, by the first core network device, a subscription request from the first service requester, wherein the subscription request indicates to obtain terminal information of a terminal corresponding to the first service requester; and
the sending, by the first core network device, second terminal information to the first service requester comprises:
sending, by the first core network device, the second terminal information to the first service requester based on the subscription request when determining that the first terminal information is the terminal information of the terminal corresponding to the first service requester.

26. The method according to claim 25, wherein the subscription request comprises one or more of the following:
sending the second terminal information to the first service requester after the terminal corresponding to the first service requester accesses a network;
sending the second terminal information to the first service requester after the terminal corresponding to the first service requester accesses a network within specified time; and
sending the second terminal information to the first service requester after the terminal corresponding to the first service requester accesses a network in a specified area.

27. The method according to any one of claims 19 to 26, further comprising:
obtaining, by the first core network device, the second terminal information from the first terminal information.

28. The method according to any one of claims 19 to 27, wherein the second terminal information comprises one or more of the following information:
a subscription concealed identifier SUCI, a subscription permanent identifier SUPI, a 5th-generation globally unique temporary identity 5G-GUTI, a temporary mobile subscriber identity TMSI, a 5G system-temporary mobile subscriber identity 5G-S-TMSI, a generic public subscription identifier GPSI, an EPC, the identification information indicating the first service requester, and a network identifier.

29. A communication method, comprising:
receiving, by an access network device, second identification information, wherein the second identification information indicates a terminal that a service requester requests to operate; and
performing, by the access network device, an access procedure of the terminal based on the second identification information.

30. The method according to claim 29, wherein the second identification information comprises:
a user identifier; or
a network identifier and the user identifier, wherein
there is a correspondence between the user identifier and the service requester.

31. The method according to claim 29, wherein the performing, by the access network device, an access procedure of the terminal based on the second identification information comprises:
constructing, by the access network device, mask information based on the second identification information; and
sending, by the access network device, the mask information to trigger the access procedure of the terminal.

32. The method according to any one of claims 29 to 31, wherein the method further comprises:
receiving, by the access network device, access indication information, wherein the access indication information is for triggering the access network device to perform the access procedure of the terminal.

33. The method according to claim 32, wherein the access indication information indicates one or more of the following information:
the access network device starting to perform the access procedure;
the access network device performing a first-mode access procedure; or
the access network device performing a second-mode access procedure.

34. A communication method, comprising:
receiving, by an access network device, second identification information, wherein the second identification information indicates a terminal corresponding to a service requester; and
performing, by the access network device, an access procedure of a plurality of terminals based on the second identification information.

35. The method according to claim 34, wherein the second identification information comprises the following information:
a user identifier;
an event identifier or a transaction identifier; and/or
a next-generation application protocol NGAP identifier, wherein
there is a correspondence between the second identification information and the service requester.

36. The method according to claim 34 or 35, wherein the performing, by the access network device, an access procedure of the terminal based on the second identification information comprises:
constructing, by the access network device, mask information based on the second identification information; and
sending, by the access network device, the mask information to trigger the access procedure of the terminal.

37. The method according to any one of claims 34 to 36, wherein the method further comprises:
receiving, by the access network device, access indication information, wherein the access indication information is for triggering the access network device to perform an access procedure of the terminal.

38. The method according to claim 37, wherein the access indication information indicates one or more of the following information:
the access network device starting to perform the access procedure;
the access network device performing a first-mode access procedure; or
the access network device performing a second-mode access procedure.

39. A communication apparatus, comprising:
a transceiver unit, configured to receive an operation request of a service requester, wherein the operation request comprises first identification information for identifying the service requester; and
a processing unit, configured to obtain second identification information based on the first identification information, wherein the second identification information indicates a terminal that the service requester requests to operate, wherein
the transceiver unit is further configured to send the second identification information to an access network device serving the terminal, and trigger the access network device to perform an access procedure of the terminal.

40. The apparatus according to claim 39, wherein the first identification information comprises at least one of the following information:
an identifier of the service requester, an application function identifier corresponding to the service requester, address information corresponding to the service requester, and port information corresponding to the service requester.

41. The apparatus according to claim 39 or 40, wherein the second identification information comprises:
mask information, wherein the mask information comprises a user identifier; or
the mask information comprises a network identifier and the user identifier, wherein
there is a correspondence between the user identifier and the service requester.

42. The apparatus according to any one of claims 39 to 41, wherein the transceiver unit is further configured to send access indication information to the access network device serving the terminal, wherein the access indication information is for triggering the access network device to perform the access procedure of the terminal.

43. The apparatus according to claim 42, wherein the access indication information indicates one or more of the following information:
the access network device starting to perform the access procedure;
the access network device performing a first-mode access procedure; or
the access network device performing a second-mode access procedure.

44. The apparatus according to any one of claims 39 to 43, wherein there is a first correspondence between the second identification information and the first identification information; and the processing unit is specifically configured to obtain the second identification information based on the first correspondence and the first identification information.

45. The apparatus according to claim 44, wherein the first core network device pre-configures the first correspondence, the first core network device generates the first correspondence, or the first core network device obtains the first correspondence from a second core network device.

46. The apparatus according to any one of claims 39 to 45, wherein the transceiver unit is further configured to receive first terminal information reported by one or more terminals in a plurality of terminals that the service requester requests to operate; and
if the first terminal information comprises an electronic product code EPC, the transceiver unit is further configured to obtain a target EPC code from the first terminal information and send the target EPC code to the service requester; or
the processing unit is further configured to obtain second terminal information based on the first terminal information.

47. The apparatus according to claim 46, wherein the second terminal information comprises one or more of the following information:
a subscription concealed identifier SUCI, a subscription permanent identifier SUPI, a 5th-generation globally unique temporary identity 5G-GUTI, a temporary mobile subscriber identity TMSI, a 5G system-temporary mobile subscriber identity 5G-S-TMSI, a generic public subscription identifier GPSI, an EPC, a network identifier, and identification information indicating the service requester.

48. A communication apparatus, comprising:
a transceiver unit, configured to receive an operation request of a service requester, wherein the operation request comprises first identification information for identifying the service requester; and
a processing unit, configured to: obtain second identification information based on the first identification information, and trigger an access network device that serves the service requester to perform an access procedure for a plurality of terminals, wherein the second identification information indicates a terminal corresponding to the service requester, wherein
the transceiver unit is further configured to receive first terminal information reported by one or more first terminals in the plurality of terminals; and
the processing unit is further configured to send third terminal information to the service requester based on the second identification information, wherein the third terminal information is terminal information that is obtained by the first core network device by screening the first terminal information and that needs to be reported to the service requester.

49. The apparatus according to claim 48, wherein the first identification information comprises at least one of the following information:
an identifier of the service requester, an application function identifier corresponding to the service requester, address information corresponding to the service requester, and port information corresponding to the service requester.

50. The apparatus according to claim 48 or 49, wherein the second identification information comprises the following information:
a user identifier;
an event identifier or a transaction identifier; and/or
a next-generation application protocol NGAP identifier, wherein
there is a correspondence between the second identification information and the service requester.

51. The apparatus according to any one of claims 48 to 50, wherein the transceiver unit is further configured to send access indication information to the access network device, wherein the access indication information is for triggering the access network device to perform an access procedure of the terminal.

52. The apparatus according to claim 51, wherein the access indication information indicates one or more of the following information:
the access network device starting to perform the access procedure;
the access network device performing a first-mode access procedure; or
the access network device performing a second-mode access procedure.

53. The apparatus according to any one of claims 48 to 52, wherein there is a first correspondence between the second identification information and the first identification information; and the processing unit is specifically configured to obtain the second identification information based on the first correspondence and the first identification information.

54. The apparatus according to claim 53, wherein the first core network device pre-configures the first correspondence, the first core network device generates the first correspondence, or the first core network device obtains the first correspondence from a second core network device.

55. The apparatus according to any one of claims 48 to 54, wherein
if the third terminal information comprises an electronic product code EPC, the transceiver unit is further configured to obtain a target EPC code from the third terminal information and send the target EPC code to the service requester; or
the processing unit is further configured to obtain fourth terminal information based on the third terminal information.

56. The apparatus according to claim 55, wherein the fourth terminal information comprises one or more of the following information:
a subscription concealed identifier SUCI, a subscription permanent identifier SUPI, a 5th-generation globally unique temporary identity 5G-GUTI, a temporary mobile subscriber identity TMSI, a 5G system-temporary mobile subscriber identity 5G-S-TMSI, a generic public subscription identifier GPSI, an EPC, a network identifier, and identification information indicating the service requester.

57. A communication apparatus, comprising:
a transceiver unit, further configured to receive first terminal information; and
a processing unit, configured to determine a first service requester based on the first terminal information, wherein the first service requester is one of at least one service requester, wherein
the transceiver unit is further configured to send second terminal information to the first service requester, wherein the second terminal information corresponds to the first terminal information.

58. The apparatus according to claim 57, wherein the first terminal information comprises identification information indicating the first service requester, and the processing unit is specifically configured to
determine the first service requester based on the identification information indicating the first service requester.

59. The apparatus according to claim 57, wherein the first terminal information comprises a first terminal identifier, and there is a correspondence between the first terminal identifier and identification information of the first service requester; and the processing unit is specifically configured to determine the first service requester based on the first terminal identifier and the correspondence.

60. The apparatus according to claim 57, wherein the processing unit is specifically configured to: obtain subscription data based on the first terminal information; and determine the first service requester based on the subscription data.

61. The apparatus according to claim 57, wherein the processing unit is further configured to: determine subscription data based on the first terminal information; and obtain the second terminal information based on the subscription data.

62. The apparatus according to claim 59, wherein the identification information of the first service requester comprises at least one of the following information:
an identifier of the first service requester, an application function identifier corresponding to the first service requester, address information corresponding to the first service requester, and port information corresponding to the first service requester.

63. The apparatus according to claim 57, wherein the transceiver unit is further configured to: receive a subscription request from the first service requester, wherein the subscription request indicates to obtain terminal information of a terminal corresponding to the first service requester; and send the second terminal information to the first service requester based on the subscription request when determining that the first terminal information is the terminal information of the terminal corresponding to the first service requester.

64. The apparatus according to claim 63, wherein the subscription request comprises one or more of the following:
sending the second terminal information to the first service requester after the terminal corresponding to the first service requester accesses a network;
sending the second terminal information to the first service requester after the terminal corresponding to the first service requester accesses a network within specified time; and
sending the second terminal information to the first service requester after the terminal corresponding to the first service requester accesses a network in a specified area.

65. The apparatus according to any one of claims 57 to 64, wherein the transceiver unit is further configured to obtain the second terminal information from the first terminal information.

66. The apparatus according to any one of claims 57 to 65, wherein the second terminal information comprises one or more of the following information:
a subscription concealed identifier SUCI, a subscription permanent identifier SUPI, a 5th-generation globally unique temporary identity 5G-GUTI, a temporary mobile subscriber identity TMSI, a 5G system-temporary mobile subscriber identity 5G-S-TMSI, a generic public subscription identifier GPSI, an EPC, the identification information indicating the first service requester, and a network identifier.

67. A communication apparatus, comprising:
a transceiver unit, configured to receive second identification information, wherein the second identification information indicates a terminal that a service requester requests to operate; and
a processing unit, configured to perform an access procedure of the terminal based on the second identification information.

68. The apparatus according to claim 67, wherein the second identification information comprises:
a user identifier; or
a network identifier and the user identifier, wherein
there is a correspondence between the user identifier and the service requester.

69. The apparatus according to claim 67, wherein the processing unit is specifically configured to construct mask information based on the second identification information; and
the transceiver unit is specifically configured to send the mask information to trigger the access procedure of the terminal.

70. The apparatus according to any one of claims 67 to 69, wherein the transceiver unit is further configured to receive access indication information, wherein the access indication information is for triggering the access network device to perform the access procedure of the terminal.

71. The apparatus according to claim 70, wherein the access indication information indicates one or more of the following information:
the access network device starting to perform the access procedure;
the access network device performing a first-mode access procedure; or
the access network device performing a second-mode access procedure.

72. A communication apparatus, comprising:
a transceiver unit, configured to receive second identification information, wherein the second identification information indicates a terminal corresponding to a service requester; and
a processing unit, configured to perform an access procedure of a plurality of terminals based on the second identification information.

73. The apparatus according to claim 72, wherein the second identification information comprises the following information:
a user identifier;
an event identifier or a transaction identifier; and/or
a next-generation application protocol NGAP identifier, wherein
there is a correspondence between the second identification information and the service requester.

74. The apparatus according to claim 72 or 73, wherein the processing unit is specifically configured to construct mask information based on the second identification information; and
the transceiver unit is specifically configured to send the mask information to trigger the access procedure of the terminal.

75. The apparatus according to any one of claims 72 to 74, wherein the transceiver unit is further configured to receive access indication information, wherein the access indication information is for triggering the access network device to perform an access procedure of the terminal.

76. The apparatus according to claim 75, wherein the access indication information indicates one or more of the following information:
the access network device starting to perform the access procedure;
the access network device performing a first-mode access procedure; or
the access network device performing a second-mode access procedure.

77. A communication apparatus, comprising at least one processor and a memory, wherein
the memory is configured to store a computer program or instructions; and
the at least one processor is configured to execute the computer program or the instructions, to perform the method according to any one of claims 1 to 38.

78. A chip system, wherein the chip system comprises a processing circuit, and the processing circuit is coupled to a storage medium; and
the processing circuit is configured to: execute a part or all of a computer program or instructions in the storage medium; and when the part or all of the computer program or the instructions is executed, implement the method according to any one of claims 1 to 38.

79. A computer-readable storage medium, wherein the computer-readable storage medium stores instructions; and when the instructions are executed by a computer, the method according to any one of claims 1 to 38 is performed.

80. A computer program product comprising a computer program or instructions, wherein when the computer program product runs on a computer, the method according to any one of claims 1 to 38 is performed.
